# EUROPEAN PATENT SPECIFICATION

(11) **EP 4 403 247 B1**
(45) Date of publication and mention of the grant of the patent: **02.09.2026**
(21) Application number: 22883585.6
(22) Date of filing: 18.10.2022
(51) Int. Cl.: B01D 53/14, B01D 53/62, B01D 53/75, C01B 32/50, F23J 15/06, B01D 46/00, B01D 51/10, B01D 53/26, B01D 53/18, B01D 53/78

(54) **CO2 RECOVERY SYSTEM, AND CO2 RECOVERY METHOD**
CO2-RÜCKGEWINNUNGSSYSTEM UND CO2-RÜCKGEWINNUNGSVERFAHREN
SYSTÈME DE RÉCUPÉRATION DE CO2, ET PROCÉDÉ DE RÉCUPÉRATION DE CO2

(30) Priority: 21.10.2021 JP 2021172644
(43) Date of publication of application: 24.07.2024
(73) Proprietor: Mitsubishi Heavy Industries, Ltd., Tokyo 100-8332 (JP)
(72) Inventor: SUGIURA, Takuya, Tokyo 100-8332 (JP); TSUJIUCHI, Tatsuya, Tokyo 100-8332 (JP); TANAKA, Hiroshi, Tokyo 100-8332 (JP); HIRATA, Takuya, Tokyo 100-8332 (JP); IMADA, Junji, Tokyo 100-8332 (JP); SHINDO, Yoshitaka, Tokyo 100-8332 (JP); DAIMARU, Takuichiro, Tokyo 100-8332 (JP); NAGAYASU, Hiromitsu, Tokyo 100-8332 (JP)
(74) Representative: Studio Torta S.p.A.
(86) International application number: PCT/JP2022/038811
(87) International publication number: WO 2023/068281

(56) References cited:
- WO-A1-2011/105120
- WO-A1-2011/132659
- WO-A1-2013/039040
- WO-A1-2018/189947
- WO-A1-2021/131459
- JP-A- 2009 247 932
- JP-A- 2012 063 041
- JP-A- 2013 061 088
- JP-A- 2021 007 917
- US-A1- 2016 361 682
- US-A1- 2017 120 186

## Description

### Technical Field

The present disclosure relates to a CO₂ recovery system and a CO₂ recovery method.

### Background Art

Various methods have been proposed for a method of recovering and removing an acidic gas, particularly CO₂, contained in a flue gas from a boiler, for example. For example, PTL 1 describes a method of removing and recovering CO₂ in an exhaust gas discharged from a combustion facility or the like by bringing the CO₂ into contact with a CO₂ absorption liquid using, for example, an amine aqueous solution. PTL 2-4 disclose a CO₂ absorption system for a combustion flue gas with a cooling device.

### Citation List

### Patent Literature

[PTL 1] Japanese Unexamined Patent Application Publication No. 2011-005368
[PTL 2] WO 2013/039040 A1
[PTL 3] US 2017/120186 A1
[PTL 4] US 2016/361682 A1

### Summary of Invention

### Technical Problem

In a system for recovering CO₂ from the exhaust gas as described above, wastewater generated from moisture in the exhaust gas or the like is discharged to the outside of the system, and a wastewater treatment is performed during the discharge. Therefore, it is required to appropriately treat the wastewater.

The present disclosure has been made to solve the above-described problem, and an object of the present disclosure is to provide a CO₂ recovery system and a CO₂ recovery method capable of appropriately treating wastewater.

### Solution to Problem

In order to solve the above-described problem and achieve the object, according to the present disclosure, there is provided a CO₂ recovery system including: a combustion facility; a dust collector that removes a solid component from an exhaust gas containing CO₂, the exhaust gas being discharged from the combustion facility and introduced into the dust collector; an exhaust gas cooling device that brings the exhaust gas, which is introduced into the exhaust gas cooling device, into contact with cooling water to cool the exhaust gas; a CO₂ absorption tower that brings the exhaust gas, which is cooled by the exhaust gas cooling device and introduced into the CO₂ absorption tower, into contact with a CO₂ absorption liquid to remove the CO₂ from the exhaust gas; and a cooling water introduction line that is connected to the exhaust gas cooling device and a supply location, which is a location upstream of the dust collector in a flow of the exhaust gas, and allows at least a portion of the cooling water inside the exhaust gas cooling device to be introduced into the supply location.

In order to solve the above-described problem and achieve the object, according to the present disclosure, there is provided a CO₂ recovery method including: a step of generating an exhaust gas containing CO₂ by combusting in a combustion facility; a step of removing a solid component from the exhaust gas discharged from the combustion facility, through a dust collector; a step of bringing the exhaust gas into contact with cooling water to cool the exhaust gas, through an exhaust gas cooling device; a step of bringing the exhaust gas cooled by the exhaust gas cooling device into contact with a CO₂ absorption liquid to remove the CO₂ from the exhaust gas; and a step of introducing at least a portion of the cooling water inside the exhaust gas cooling device to a supply location, which is a location upstream of the dust collector in a flow of the exhaust gas.

### Advantageous Effects of Invention

According to the present disclosure, wastewater can be appropriately treated.

### Brief Description of Drawings

Fig. 1 is a schematic block diagram of a CO₂ recovery system according to a first embodiment.
Fig. 2 is a schematic diagram of a CO₂ recovery apparatus according to the first embodiment.
Fig. 3 is a schematic block diagram of the CO₂ recovery system according to the first embodiment.
Fig. 4 is a flowchart illustrating an example of a method for setting a supply amount of an acidic gas remover.
Fig. 5A is a schematic block diagram of a CO₂ recovery system according to a second embodiment.
Fig. 5B is a schematic block diagram of a CO₂ recovery system according to another example of the second embodiment.
Fig. 6 is a schematic block diagram of a CO₂ recovery system according to a third embodiment.
Fig. 7 is a flowchart illustrating a control flow of an operating condition according to the third embodiment.
Fig. 8 is a schematic block diagram of a CO₂ recovery system according to another example of the third embodiment.
Fig. 9 is a flowchart illustrating a control flow of an operating condition according to another example of the third embodiment.
Fig. 10 is a schematic block diagram of a CO₂ recovery system according to a fourth embodiment.
Fig. 11 is a schematic block diagram of a CO₂ recovery system according to another example of the fourth embodiment. Description of Embodiments

Hereinafter, a preferred embodiment of the present invention will be described in detail with reference to the accompanying drawings. The present invention is not limited by the embodiment, and in a case where there are a plurality of the embodiments, the present invention also includes configurations in which the respective embodiments are combined with each other.

### (First Embodiment)

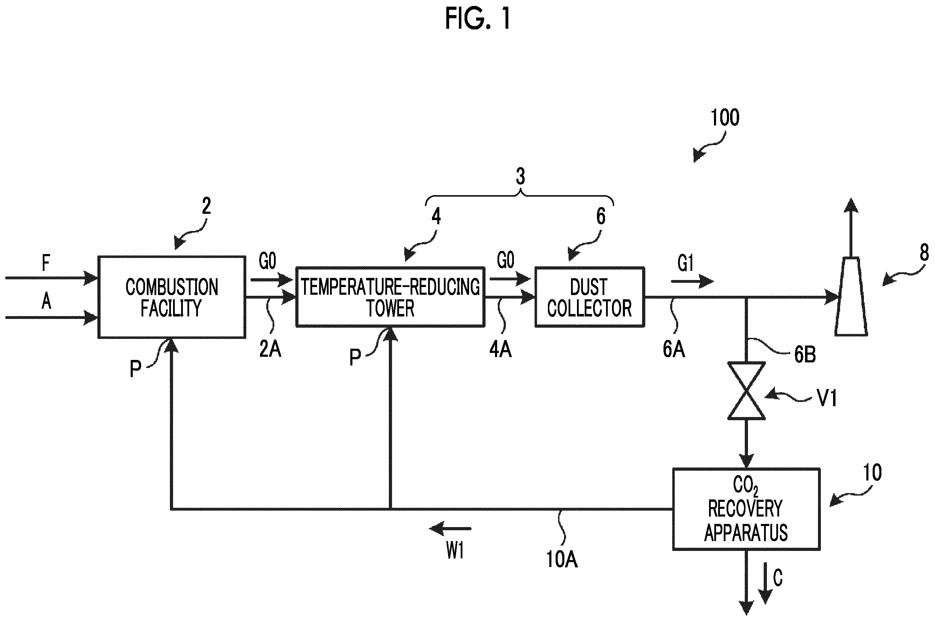

Fig. 1 is a schematic block diagram of a CO₂ recovery system according to a first embodiment. As shown in Fig. 1, a CO₂ recovery system 100 according to the first embodiment includes a combustion facility 2, an exhaust gas treatment facility 3, a chimney 8, an adjustment unit V1, and a CO₂ recovery apparatus 10.

### (Combustion Facility)

The combustion facility 2 is a facility that receives introduced fuel F and air A and combusts the fuel F. An exhaust gas G0 generated by combustion is discharged from the combustion facility 2. The exhaust gas G0 is a gas containing CO₂. The fuel F may be any fuel, and examples thereof include coal, natural gas, waste, biogas, blast furnace gas, and coke oven gas. The combustion facility 2 may be any facility as long as the fuel F is combusted.

### (Exhaust Gas Treatment Facility)

The exhaust gas treatment facility 3 is a facility that treats the exhaust gas G0 discharged from the combustion facility 2. The exhaust gas treatment facility 3 is connected to the combustion facility 2 via a discharge line 2A. The exhaust gas G0 discharged from the combustion facility 2 is introduced into the exhaust gas treatment facility 3 through the discharge line 2A and is treated in the exhaust gas treatment facility 3. The exhaust gas treatment facility 3 may be a facility that performs any treatment on the exhaust gas G0, but preferably includes a dust collector 6. The dust collector 6 is a device that recovers a solid component (dust) contained in the exhaust gas G0. For example, the dust collector 6 may recover the solid component (dust) by filtering the exhaust gas G0 with a filter. Since the recovery of the CO₂ from the exhaust gas G0 is performed by the CO₂ recovery apparatus 10, the exhaust gas treatment facility 3 in the present embodiment may perform a process other than recovering the CO₂ from the exhaust gas G0.

In the present embodiment, the exhaust gas treatment facility 3 includes a temperature-reducing tower 4 that cools the exhaust gas G0 and the dust collector 6. The temperature-reducing tower 4 is provided upstream of the dust collector 6 in a flow of the exhaust gas G0 and, in other words, is provided between the combustion facility 2 and the dust collector 6. The temperature-reducing tower 4 is connected to the discharge line 2A, and the exhaust gas G0 discharged from the combustion facility 2 is introduced from the discharge line 2A. The temperature-reducing tower 4 cools the exhaust gas G0 by supplying (spraying, in the present embodiment) cooling water to the exhaust gas G0. The temperature-reducing tower 4 and the dust collector 6 are connected to each other via a discharge line 4A. The exhaust gas G0 cooled by the temperature-reducing tower 4 is introduced into the dust collector 6 through the discharge line 4A, and at least a portion of the solid component is recovered by the dust collector 6.

The configuration of the exhaust gas treatment facility 3 is not limited to the above description and may be any configuration, and for example, only the dust collector 6 may be provided, or a device other than the temperature-reducing tower 4 and the dust collector 6 may be provided.

### (Chimney)

The chimney 8 is a tower that discharges an exhaust gas G1 treated by the exhaust gas treatment facility 3. The chimney 8 is connected to the exhaust gas treatment facility 3 via a discharge line 6A. More specifically, in the present embodiment, the dust collector 6 and the chimney 8 are connected via the discharge line 6A. The exhaust gas G1 from which the solid component has been removed by the dust collector 6 is introduced into the chimney 8 through the discharge line 6A and is discharged from the chimney 8.

The CO₂ recovery system 100 may be provided with a power generation facility that generates power by using the exhaust gas as a power source. The power generation facility may be provided, for example, between the combustion facility 2 and the exhaust gas treatment facility 3.

### (CO₂ Recovery Apparatus)

The CO₂ recovery apparatus 10 is an apparatus that recovers CO₂ from the exhaust gas G0 discharged from the combustion facility 2. More specifically, the CO₂ recovery apparatus 10 brings the exhaust gas G0, which is discharged from the combustion facility 2 and introduced into the CO₂ recovery apparatus 10, into contact with a CO₂ absorption liquid S1 to remove the CO₂ from the exhaust gas G0. The CO₂ recovery apparatus 10 is connected to the combustion facility 2 via an exhaust gas introduction line 6B. In the present embodiment, the exhaust gas introduction line 6B is branched from the discharge line 6A and is connected to the discharge line 6A and the CO₂ recovery apparatus 10. That is, in the present embodiment, it can be said that the CO₂ recovery apparatus 10 is connected to the exhaust gas treatment facility 3 via the exhaust gas introduction line 6B. Therefore, the exhaust gas G1 that has been treated by the exhaust gas treatment facility 3 is introduced into the CO₂ recovery apparatus 10.

The exhaust gas introduction line 6B is provided with the adjustment unit V1 that adjusts a flow rate of the exhaust gas G1 to be introduced into the CO₂ recovery apparatus 10. The adjustment unit V1 is an openable/closable valve in the present embodiment, and introduces the exhaust gas G1 into the CO₂ recovery apparatus 10 in an opened state and stops the introduction of the exhaust gas G1 into the CO₂ recovery apparatus 10 in a closed state. In addition, the adjustment unit V1 can adjust the flow rate of the exhaust gas G1 to be introduced into the CO₂ recovery apparatus 10 by adjusting the opening degree thereof. The adjustment unit V1 may be controlled by a control unit 40, which will be described below. The adjustment unit V1 is not limited to the valve and may be any mechanism capable of adjusting the flow rate of the exhaust gas G1.

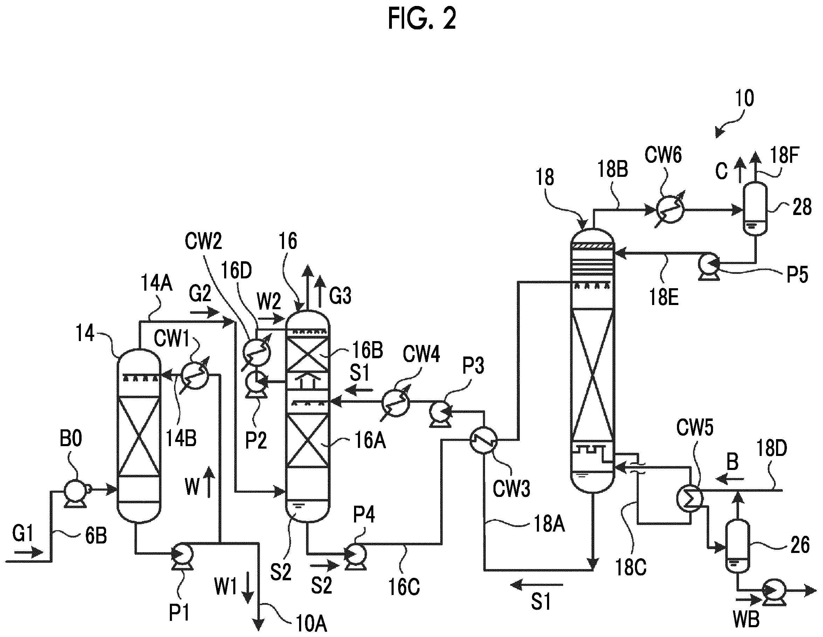

The CO₂ recovery apparatus 10 will be described in detail. Fig. 2 is a schematic diagram of the CO₂ recovery apparatus according to the first embodiment. As shown in Fig. 2, the CO₂ recovery apparatus 10 includes an exhaust gas cooling device 14, a CO₂ absorption tower 16, and a regeneration tower 18.

### (Exhaust Gas Cooling Device)

The exhaust gas cooling device 14 is a device that cools the exhaust gas G1 by using cooling water W, and may be called an exhaust gas cooling tower. The exhaust gas cooling device 14 is connected to the exhaust gas introduction line 6B, and the exhaust gas G0 (the exhaust gas G1 treated by the exhaust gas treatment facility 3, in the present embodiment) discharged from the combustion facility 2 is introduced from the exhaust gas introduction line 6B. In the present embodiment, a blower B0 is disposed on the exhaust gas introduction line 6B, and the exhaust gas G1 boosted by the blower B0 is introduced into the exhaust gas cooling device 14.

A cooled exhaust gas introduction line 14A and a cooling line 14B are connected to the exhaust gas cooling device 14. The cooling line 14B is a pipe for circulating the cooling water W into the exhaust gas cooling device 14. The cooling line 14B is provided with a pump P1 and a cooler CW1. In the present embodiment, the cooling water W is circulated by driving the pump P1. In the cooling line 14B, the cooling water W is cooled by the cooler CW1, and then is supplied into the exhaust gas cooling device 14 to come into contact with the exhaust gas G1 introduced into the exhaust gas cooling device 14, thereby cooling the exhaust gas G1 to a predetermined temperature. The cooling water W that has cooled the exhaust gas G1 inside the exhaust gas cooling device 14 is returned from the exhaust gas cooling device 14 to the cooling line 14B.

### (CO₂ Absorption Tower)

The CO₂ absorption tower 16 is a facility that brings the exhaust gas into contact with the CO₂ absorption liquid S1 to remove the CO₂ from the exhaust gas. The CO₂ absorption tower 16 is provided at a downstream stage of the exhaust gas cooling device 14 in a flow direction of the exhaust gas G. The CO₂ absorption tower 16 is connected to the exhaust gas cooling device 14 via the cooled exhaust gas introduction line 14A. An exhaust gas G2, which is the exhaust gas G1 cooled by the exhaust gas cooling device 14, is introduced into the CO₂ absorption tower 16 through the cooled exhaust gas introduction line 14A. That is, in the present embodiment, the CO₂ absorption tower 16 removes the CO₂ from the exhaust gas G2 cooled by the exhaust gas cooling device 14.

The CO₂ absorption tower 16 includes a CO₂ recovery section 16A and a washing section 16B. In the CO₂ recovery section 16A, the CO₂ in the exhaust gas G2 is removed by the CO₂ absorption liquid S1. In the CO₂ recovery section 16A, the CO₂ absorption liquid S1 is supplied, so that the exhaust gas G2 passing through the CO₂ recovery section 16A comes into countercurrent contact with the CO₂ absorption liquid S1. The CO₂ in the exhaust gas G2 is absorbed by the CO₂ absorption liquid S1 through a chemical reaction. A decarbonated gas G3, which is the exhaust gas G2 from which the CO₂ has been removed in the CO₂ recovery section 16A, is washed with a rinse liquid W2 in the washing section 16B installed above the gas flow downstream side of the CO₂ recovery section 16A. In the washing section 16B, the rinse liquid W2 supplied from a nozzle comes into gas-liquid contact with the decarbonated gas G3, and the CO₂ absorption liquid S1 (a component of the CO₂ absorption liquid S1) entrained in the decarbonated gas G3 is recovered. More specifically, in the washing section 16B, a rinse water circulation line 16D is connected, and the rinse liquid W2 is circulated by a pump P2 disposed on the rinse water circulation line 16D. Then, the rinse liquid W2 is cooled by a cooler CW2 disposed on the rinse water circulation line 16D and is supplied into the washing section 16B to wash the passing decarbonated gas G3 while cooling the decarbonated gas G3 to a predetermined temperature. In this way, the mist-like CO₂ absorption liquid S1 (the component of the CO₂ absorption liquid 31) entrained in the decarbonated gas G3 is washed with the rinse liquid W2 in the washing section 16B, so that the discharge of the CO₂ absorption liquid entrained in the decarbonated gas G3 is prevented, thereby reducing the emission. The temperature at which the decarbonated gas G3 is cooled may be substantially the same as the introduction temperature at which the exhaust gas G2 is introduced into the CO₂ absorption tower 16, and this maintains the water balance within the system. For example, in a case where the moisture amount in the exhaust gas G2 to be introduced into the CO₂ absorption tower 16 is 10 wt%, the cooling temperature may be adjusted such that the moisture amount in the decarbonated gas G3 to be discharged from the top of the CO₂ absorption tower 16 is also 10 wt%.

The CO₂ absorption tower 16 is connected to the discharge line 6A via a decarbonated gas introduction line 16E. The decarbonated gas G3 is discharged from the chimney 8 through the decarbonated gas introduction line 16E and the discharge line 6A.

The CO₂ absorption liquid S1 is not particularly limited, and examples thereof include amine compounds such as alkanolamines or hindered amines having an alcoholic hydroxyl group. Examples of such alkanolamines include monoethanolamine, diethanolamine, triethanolamine, methyldiethanolamine, diisopropanolamine, and diglycolamine, and monoethanolamine (MEA) is generally preferable. In addition, examples of the hindered amines having an alcoholic hydroxyl group include 2-amino-2-methyl-1-propanol (AMP), 2-(ethylamino)-ethanol (EAE), 2-(methylamino)-ethanol (MAE), and 2-(diethylamino)-ethanol (DEAE) .

A rich solution S2, which is the CO₂ absorption liquid S1 that has absorbed the CO₂ in the exhaust gas G2, is stored in a bottom portion of the CO₂ absorption tower 16. A rich solution introduction line 16C through which the rich solution S2 is discharged from the bottom portion of the CO₂ absorption tower 16 and the rich solution S2 is introduced into a regeneration tower 18 side, and a lean solution introduction line 18A through which the CO₂ absorption liquid S1 (lean solution) is discharged from a bottom portion of the regeneration tower 18 and is introduced into a CO₂ absorption tower 16 side intersect each other and are connected to the CO₂ absorption tower 16 and the regeneration tower 18. Then, a heat exchanger CW3 is disposed at an intersection of the rich solution introduction line 16C and the lean solution introduction line 18A. In the heat exchanger CW3, the rich solution S2 is heated by the CO₂ absorption liquid S1 (lean solution) regenerated by the regeneration tower 18 and is supplied to the regeneration tower 18. In addition, a pump P3 that boosts the CO₂ absorption liquid S1 (lean solution) and a cooler CW4 that cools the CO₂ absorption liquid S1 (lean solution) using cooling water are disposed between the heat exchanger CW3 and the CO₂ absorption tower 16, and the CO₂ absorption liquid S1 (lean solution) regenerated by the regeneration tower 18 is supplied into the CO₂ absorption tower 16 after being boosted and cooled through the lean solution introduction line 18A.

### (Regeneration Tower)

The regeneration tower 18 absorbs CO₂ from the rich solution S2 that has absorbed the CO₂ in the exhaust gas G2 in the CO₂ absorption tower 16, and regenerates the CO₂ absorption liquid S1. A reboiler CW5 disposed on a reboiler line 18C is provided on a bottom portion side of the regeneration tower 18. In the reboiler CW5, when a portion of the CO₂ absorption liquid S1 (lean solution) is circulated through the reboiler line 18C, a portion of the CO₂ absorption liquid S1 (lean solution) is indirectly heated by saturated steam B, and the steam is introduced into the inside of the regeneration tower 18. The reboiler CW5 is provided with a saturated steam introduction line 18D for introducing the saturated steam B. A separation drum 26 is disposed on the saturated steam introduction line 18D and separates a condensed steam water WB.

The rich solution S2 generated in the CO₂ absorption tower 16 is introduced into the regeneration tower 18 from the rich solution introduction line 16C. A boost pump P4 is disposed on the rich solution introduction line 16C, and the rich solution S2 is boosted by the boost pump P4, heated by the heat exchanger CW3 using the CO₂ absorption liquid S1 (lean solution) regenerated by the regeneration tower 18, and supplied to the regeneration tower 18. The rich solution S2 released from an upper portion side of a side surface to the inside of the regeneration tower 18 is subjected to an endothermic reaction by the steam supplied from the bottom portion side, and most of the CO₂ is desorbed and released. The CO₂ absorption liquid that has released a portion or most of the CO₂ in the regeneration tower 18 is referred to as a semi-lean solution. By the time the semi-lean solution reaches the bottom portion of the regeneration tower 18, the semi-lean solution becomes the CO₂ absorption liquid S1 (lean solution) in which nearly all the CO₂ has been removed. A portion of the CO₂ absorption liquid S1 (lean solution) is heated by the reboiler CW5 using the saturated steam B, and the steam for CO₂ desorption is supplied to the inside of the regeneration tower 18.

Meanwhile, a gas discharge line 18B for discharging a CO₂-entrained gas accompanying the steam released from the rich solution S2 and the semi-lean solution in the tower is connected to the top of the regeneration tower 18. The gas discharge line 18B is provided with a cooler CW6 that cools the CO₂-entrained gas accompanying the steam, and a reflux water drum 28 that flashes the cooled CO₂-entrained gas to perform gas-liquid separation. The reflux water separated and recirculated from the CO₂-entrained gas accompanying the steam in the reflux water drum 28 is supplied to the upper portion of the regeneration tower 18 by a reflux water circulation pump P5 disposed on a reflux water line 18E.

A separated gas discharge line 18F for discharging a CO₂ gas C, which is the CO₂-entrained gas from which the reflux water is separated, is connected to the top of the reflux water drum 28. The CO₂ gas C discharged through the separated gas discharge line 18F is, for example, compressed and recovered. The CO₂ gas C is sent to a use destination, and for example, may be used for the cultivation of plants in a plant factory, may be used for chemical synthesis or the like, may be injected into an oil field by using an enhanced oil recovery (EOR), or may be stored in an aquifer.

The CO₂ recovery apparatus 10 has the above-described configuration.

### (Discharge of Cooling Water)

As described above, the exhaust gas cooling device 14 brings the cooling water W into contact with the exhaust gas G1 to cool the exhaust gas G1. Therefore, the moisture in the exhaust gas G1 is condensed into the condensed water and is entrained in the cooling water W, and this may lead to an increase in the flow rate of the cooling water W. In the present embodiment, at least a portion of the cooling water W is introduced into a supply location P, which is a location upstream of the dust collector 6 in the flow of the exhaust gas G0, so that it is possible to appropriately treat the excessive cooling water W as wastewater while suppressing an excessive increase in the flow rate of the cooling water W inside the exhaust gas cooling device 14.

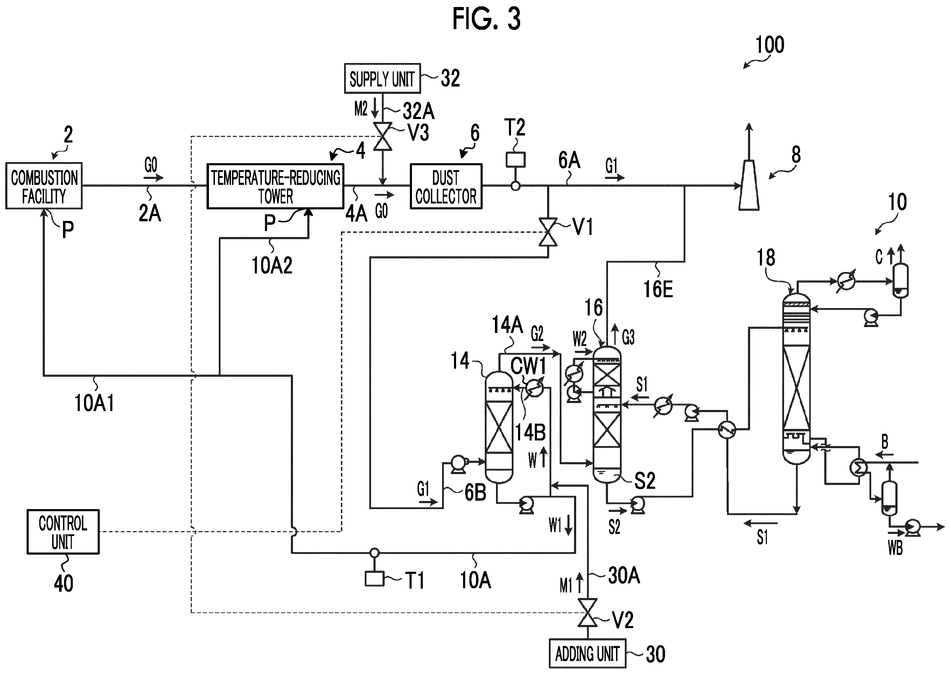

A configuration for discharging the cooling water W will be described in detail. Fig. 3 is a schematic block diagram of the CO₂ recovery system according to the first embodiment. As shown in Fig. 3, the CO₂ recovery system 100 includes a cooling water introduction line 10A, an adding unit 30, a supply unit 32, the control unit 40, and sensors T1 and T2.

### (Cooling Water Introduction Line)

The cooling water introduction line 10A is a pipe for connecting the exhaust gas cooling device 14 and the supply location P to each other. In the example of the present embodiment, the cooling water introduction line 10A is connected to the cooling line 14B and is connected to the exhaust gas cooling device 14 via the cooling line 14B. However, the cooling water introduction line 10A may be directly connected to the exhaust gas cooling device 14 without passing through the cooling line 14B. Cooling water W1 (wastewater), which is a portion of the cooling water W inside the exhaust gas cooling device 14, is introduced into the cooling water introduction line 10A and is introduced into the supply location P through the cooling water introduction line 10A.

The supply location P to which the cooling water introduction line 10A is connected may be any location upstream of the dust collector 6 in the flow of the exhaust gas G0, and the supply location P may be one or multiple. In the example of the present embodiment, the combustion facility 2 and the temperature-reducing tower 4 are the supply locations P. That is, in the example of the present embodiment, the cooling water introduction line 10A is connected to the combustion facility 2 and the temperature-reducing tower 4. The cooling water introduction line 10A is branched into cooling water introduction lines 10A1 and 10A2, the cooling water introduction line 10A1 is connected to the combustion facility 2, and the cooling water introduction line 10A2 is connected to the temperature-reducing tower 4. That is, the exhaust gas cooling device 14 (cooling line 14B) and the combustion facility 2 are connected to each other via the cooling water introduction lines 10A and 10A1, and the cooling water W1 inside the exhaust gas cooling device 14 (cooling line 14B) is introduced into the combustion facility 2 through the cooling water introduction lines 10A and 10A1. The cooling water W1 introduced into the combustion facility 2 is evaporated by being heated in the combustion facility 2. The combustion temperature in the combustion facility 2 is adjusted by supplying the cooling water W1 to the combustion facility 2. For example, a temperature sensor such as a thermocouple is installed inside the combustion facility, and the combustion gas temperature of a high-temperature portion in the combustion facility is set to 1400°C or lower, so that the amount of NOx generated can be suppressed. The connection location (that is, the supply location P) of the cooling water introduction line 10A1 in the combustion facility 2 may be at any position.

The exhaust gas cooling device 14 (cooling line 14B) and the temperature-reducing tower 4 are connected to each other via the cooling water introduction lines 10A and 10A2, and the cooling water W1 inside the exhaust gas cooling device 14 (cooling line 14B) is introduced into the temperature-reducing tower 4 through the cooling water introduction lines 10A and 10A2. The cooling water W1 introduced into the temperature-reducing tower 4 is treated in the temperature-reducing tower 4. Specifically, the cooling water W introduced into the temperature-reducing tower 4 is sprayed toward the exhaust gas G0 in the temperature-reducing tower 4, thereby reducing the temperature of the exhaust gas G0.

In the above description, the cooling water W1 inside the exhaust gas cooling device 14 is supplied to both the combustion facility 2 and the temperature-reducing tower 4, but the present disclosure is not limited thereto, and the cooling water W1 may be supplied to any one of the combustion facility 2 and the temperature-reducing tower 4. For example, in a case where the cooling water W1 inside the exhaust gas cooling device 14 is supplied only to the combustion facility 2, the cooling water introduction line 10A may be configured to connect the exhaust gas cooling device 14 (cooling line 14B) and the combustion facility 2 without providing the cooling water introduction line 10A2. In addition, for example, in a case where the cooling water W1 inside the exhaust gas cooling device 14 is supplied only to the temperature-reducing tower 4, the cooling water introduction line 10A may be configured to connect the exhaust gas cooling device 14 (cooling line 14B) and the temperature-reducing tower 4 without providing the cooling water introduction line 10A1.

Since the condensed water of the exhaust gas G1 is entrained in the cooling water W inside the exhaust gas cooling device 14, the flow rate of the cooling water W increases by the amount of the condensed water of the exhaust gas G1. Since the cooling water W1 is a portion extracted from the cooling water W, it can be said that the cooling water W1 contains the condensed water of the exhaust gas G1. In addition, since the cooling water introduction line 10A is not provided with a mechanism that performs water treatment on the cooling water W1, the cooling water W1 in a state of containing the condensed water of the exhaust gas G1 and not being subjected to water treatment may be supplied to the supply location P. The water treatment herein refers to, for example, processes such as removing or clarifying foreign matters in the cooling water W1.

The flow rate of the cooling water W1 to be supplied to the supply location P (the combustion facility 2 and the temperature-reducing tower 4 in the example of the present embodiment) through the cooling water introduction line 10A may be any flow rate, but it is preferable that an amount corresponding to the flow rate of the cooling water W increased inside the exhaust gas cooling device 14 (an amount within a predetermined range with respect to the increased flow rate) is set as the flow rate of the cooling water W1. Further, in the present embodiment, the increased flow rate of the cooling water W inside the exhaust gas cooling device 14 is set as the flow rate of the cooling water W1. That is, it can be said that the flow rate of the cooling water W1 corresponds to the flow rate of the condensed water of the exhaust gas G1 entrained in the cooling water W (that is, the flow rate of the condensed water generated in the exhaust gas cooling device 14). Therefore, in the present embodiment, the supply location P is supplied with the cooling water W1 corresponding to the increased flow rate inside the exhaust gas cooling device 14. The flow rate of the cooling water W1 may be adjusted by any method to have the flow rate of the cooling water W increased inside the exhaust gas cooling device 14. For example, the opening degree of an opening-closing valve or the like may be adjusted to maintain a constant amount of the cooling water W to be returned from the cooling line 14B into the exhaust gas cooling device 14. In this case, the cooling water W corresponding to the increased flow rate inside the exhaust gas cooling device 14 is led out to the cooling water introduction line 10A as the cooling water W1 without being returned to the exhaust gas cooling device 14.

### (Adding Unit)

The adding unit 30 is a device that adds a pH adjuster M1 to the cooling water W. The pH adjuster M1 is a chemical agent for adjusting the pH of the cooling water W and is, in the present embodiment, an alkaline agent for raising the pH of the cooling water W. Examples of the pH adjuster M1 include a sodium hydroxide aqueous solution. The adding unit 30 is connected to the cooling line 14B via an introduction line 30A. The pH adjuster M1 from the adding unit 30 is added to the cooling water W flowing through the cooling line 14B through the introduction line 30A. Consequently, the pH of the cooling water W is adjusted, and the pH of the cooling water W1 which is a portion of the cooling water W is also adjusted. The adding unit 30 is not limited to being connected to the cooling line 14B, and may be directly connected to, for example, the exhaust gas cooling device 14 or may be connected to the cooling water introduction line 10A. In a case where the adding unit 30 is connected to the cooling water introduction line 10A, the pH adjuster M1 is added to the cooling water W1.

The introduction line 30A may be provided with an adjustment unit V2 that adjusts the addition of the pH adjuster M1 to the cooling water W. The adjustment unit V2 is an openable/closable valve in the present embodiment, and adds the pH adjuster M1 to the cooling water W in an opened state and stops the addition of the pH adjuster M1 to the cooling water W in a closed state. In addition, the adjustment unit V2 can adjust the addition amount of the pH adjuster M1 by adjusting the opening degree thereof. The adjustment unit V2 may be controlled by the control unit 40, which will be described below. The adjustment unit V2 is not limited to the valve and may be any mechanism capable of adjusting the addition amount of the pH adjuster M1.

### (Supply Unit)

The supply unit 32 is a device that supplies an acidic gas remover M2 to the exhaust gas G0. The acidic gas remover M2 is a chemical agent for removing at least a portion of an acidic gas contained in the exhaust gas G0. The same agent as the pH adjuster M1 may be used as the acidic gas remover M2. The supply unit 32 is connected to the discharge line 4A via an introduction line 32A. The acidic gas remover M2 from the supply unit 32 is supplied to the exhaust gas G0 flowing through the discharge line 4A through the introduction line 32A. Consequently, at least a portion of the acidic gas contained in the exhaust gas G0 is removed. The supply unit 32 is not limited to being connected to the discharge line 4A (that is, between the temperature-reducing tower 4 and the dust collector 6), and may be connected to any location downstream of the combustion facility 2 in the flow of the exhaust gas G0, more specifically, to any location between the combustion facility 2 and the chimney 8. In addition, the supply unit 32 may supply a carrier gas (for example, air) for supplying the acidic gas remover M2, together with the acidic gas remover M2.

The introduction line 32A may be provided with an adjustment unit V3 that adjusts the supply of the acidic gas remover M2 to the exhaust gas G0. The adjustment unit V3 is an openable/closable valve in the present embodiment, and supplies the acidic gas remover M2 to the exhaust gas G0 in an opened state and stops the supply of the acidic gas remover M2 to the exhaust gas G0 in a closed state. In addition, the adjustment unit V3 can adjust the supply amount of the acidic gas remover M2 by adjusting the opening degree thereof. The adjustment unit V3 may be controlled by the control unit 40, which will be described below. The adjustment unit V3 is not limited to the valve and may be any mechanism capable of adjusting the supply amount of the acidic gas remover M2. In addition, the adjustment unit V3 is not an essential configuration and may not be included in the CO₂ recovery system 100.

### (Control Unit)

The control unit 40 may be, for example, a computer including an arithmetic circuit such as a central processing unit (CPU). The control unit 40 reads a program (software) from a storage unit (not shown) and executes control of each unit of the CO₂ recovery system 100, such as the control of the flow rate of the exhaust gas G1.

In the present embodiment, the control unit 40 controls the adjustment unit V1 to control the flow rate of the exhaust gas G1 to be introduced into the CO₂ recovery apparatus 10 through the adjustment unit V1. The control unit 40 may adjust the flow rate of the exhaust gas G1 to be introduced into the CO₂ recovery apparatus 10, for example, according to the combustion state in the combustion facility 2. The combustion state herein indicates the degree of combustion in the combustion facility 2 and may be, for example, a combustion amount, a combustion temperature, or the like. In this case, the control unit 40 may increase the flow rate of the exhaust gas G1 to be introduced into the CO₂ recovery apparatus 10 as the combustion amount in the combustion facility 2 increases (for example, as the amount of heat generated per unit amount of the fuel F increases).

The control unit 40 controls the adjustment unit V2 to control the addition amount of the pH adjuster M1 to the cooling water W through the adjustment unit V2. For example, the control unit 40 controls the addition amount of the pH adjuster M1 such that the pH of the cooling water W and W1 falls within a predetermined range, based on at least one of the pH of the cooling water W1 and the flow rate of the cooling water W1. In the present embodiment, the cooling water introduction line 10A is provided with the sensor T1 that measures the pH of the cooling water W1 and the flow rate of the cooling water W1, and the control unit 40 controls the addition amount of the pH adjuster M1 such that the pH of the cooling water W falls within a predetermined range, based on the pH and the flow rate of the cooling water W1 measured by the sensor T1. The predetermined range herein may be any range, and the pH may be, for example, in a range of 5 or more and 8 or less. In the present embodiment, the sensor T1 is provided on the cooling water introduction line 10A, but a position where the sensor T1 is provided is not limited thereto, and the sensor T1 may be provided at any position where the flow rate of the cooling water W or the cooling water W1 can be measured. In addition, the control unit 40 is not limited to controlling the addition amount of the pH adjuster M1 based on the measurement result of the sensor T1 and may control the addition amount of the pH adjuster M1 by any method. For example, the control unit 40 may set the addition amount of the pH adjuster M1 to be constant or may control the addition amount of the pH adjuster M1 based on the inflow rate of the exhaust gas G1 to the exhaust gas cooling device 14.

The control unit 40 controls the adjustment unit V3 to control the supply amount of the acidic gas remover M2 to the exhaust gas G0 through the adjustment unit V3. For example, the control unit 40 controls the supply amount of the acidic gas remover M2 such that the amount of impurities contained in the exhaust gas G1 falls within a predetermined range, based on the amount of impurities in the exhaust gas G1 downstream of a location to which the supply unit 32 is connected, in the flow direction of the exhaust gas G0. In the present embodiment, the sensor T2 that measures the amount of impurities contained in the exhaust gas G1 is provided downstream (here, downstream of the dust collector 6) of the location to which the supply unit 32 is connected, and the control unit 40 controls the supply amount of the acidic gas remover M2 such that the amount of impurities contained in the exhaust gas G1 falls within a predetermined range, based on the amount of impurities measured by the sensor T2. The impurities herein are, for example, HCl or SOx, and the predetermined range herein may be any range.

The control unit 40 is not limited to controlling the supply amount of the acidic gas remover M2 based on the measurement result of the sensor T2 and may control the supply amount of the acidic gas remover M2 by any method. For example, the control unit 40 may set the supply amount of the acidic gas remover M2 to be constant or may control the supply amount of the acidic gas remover M2 based on at least one of the pH of the cooling water W1 and the flow rate of the cooling water W1.

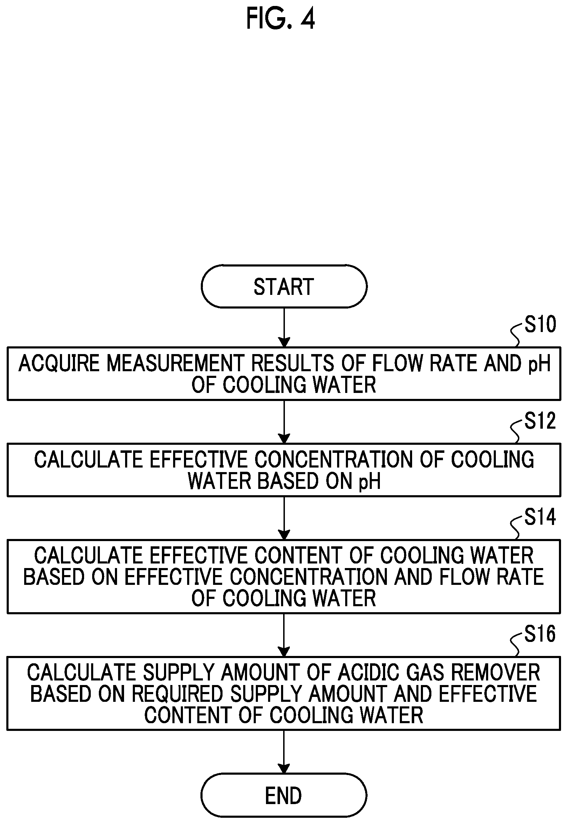

Fig. 4 is a flowchart illustrating an example of a method for setting the supply amount of the acidic gas remover. Hereinafter, an example of setting the supply amount of the acidic gas remover M2 based on the pH and the flow rate of the cooling water W1 will be described. Here, since a case where the cooling water W1 is introduced into the temperature-reducing tower 4 will be described as an example, the flow rate of the cooling water W1 indicates the flow rate of the cooling water W1 to be introduced into the temperature-reducing tower 4. As shown in Fig. 4, the control unit 40 acquires the measurement results of the flow rate and the pH of the cooling water W1 by the sensor T1 (step S10). The control unit 40 calculates the effective concentration of the cooling water W1 based on the pH of the cooling water W1 measured by the sensor T1 (step S12). The effective concentration herein indicates a concentration (kg/L) of an effective component in the cooling water W1, which is capable of removing the acidic gas from the exhaust gas G0. The effective component capable of removing the acidic gas from the exhaust gas G0 may be, for example, an alkaline component. The control unit 40 may calculate the effective concentration of the cooling water W1 by any method, based on the pH of the cooling water W1. For example, a correspondence relationship between the pH and the effective concentration may be set in advance, and the control unit 40 may calculate the effective concentration of the cooling water W1 by substituting the measurement result of the pH of the cooling water W1 into the set correspondence relationship.

The control unit 40 calculates the effective content of the cooling water W1 based on the effective concentration of the cooling water W1 and the measurement result of the flow rate of the cooling water W1 (step S14). The effective content indicates the amount of the effective component that is capable of removing the acidic gas from the exhaust gas G0 and that is contained in the cooling water W1 to be supplied to the supply location P (here, the temperature-reducing tower 4). The control unit 40 calculates the effective content by multiplying, for example, the effective concentration of the cooling water W1 and the flow rate of the cooling water W1.

The control unit 40 calculates the supply amount of the acidic gas remover M2 based on a required supply amount of the acidic gas remover M2 and an effective flow rate of the cooling water W1 (step S16). The required supply amount of the acidic gas remover M2 indicates the amount of the acidic gas remover M2 required to remove the desired amount of the acidic gas from the exhaust gas G0 in a case where it is assumed that the cooling water W1 is not supplied to the exhaust gas G0. The control unit 40 may use a value obtained by subtracting the effective flow rate of the cooling water W1 from the required supply amount of the acidic gas remover M2 as the supply amount of the acidic gas remover M2. The control unit 40 controls the adjustment unit V3 such that the supply amount of the acidic gas remover M2 is the calculated supply amount.

The control unit 40 may calculate the required supply amount, based on the amount of impurities in the exhaust gas G0 before the supply of the acidic gas remover M2 or the cooling water W1. In this case, for example, the sensor T2 is provided upstream of the temperature-reducing tower 4 and the location to which the supply unit 32 is connected, and the control unit 40 acquires the amount of impurities in the exhaust gas G0 measured by the sensor T2. However, the method for acquiring the required supply amount is not limited thereto and may be any method. For example, the required supply amount may be calculated based on the flow rate of the exhaust gas G0, or the required supply amount may be set as a constant value.

### (Effects)

As described above, in the first embodiment, the cooling water W1 inside the exhaust gas cooling device 14 is introduced into the supply location P such as the combustion facility 2 or the temperature-reducing tower 4. Therefore, it is possible to suppress an excessive increase in the flow rate of the cooling water W inside the exhaust gas cooling device 14. In addition, since the cooling water W1 is treated by the combustion facility 2, the temperature-reducing tower 4, or the like, the cooling water W1 can be appropriately treated. Further, for example, even if there is no dedicated facility for treating the cooling water W1, the cooling water W1 can be appropriately treated. Further, in a case where the cooling water W1 is supplied to the temperature-reducing tower 4, the acidic gas can be removed from the exhaust gas G0 by the effective component (the component capable of removing the acidic gas from the exhaust gas G0) contained in the cooling water W1, so that the supply amount of the acidic gas remover M2 can also be reduced. Furthermore, in a case where the acidic gas remover M2 is supplied by the carrier gas, the amount of the carrier gas can be reduced by reducing the amount of the acidic gas remover M2, the CO₂ concentration in the exhaust gas G1 drawn into the CO₂ recovery apparatus 10 can be improved, and the efficiency of CO₂ recovery can be improved.

### (Second Embodiment)

Next, a second embodiment will be described. The second embodiment is different from the first embodiment in that adjustment units V4 and V5 are provided to control the introduction amount of the cooling water W1. In the second embodiment, description of the parts with a configuration common to the first embodiment will not be repeated.

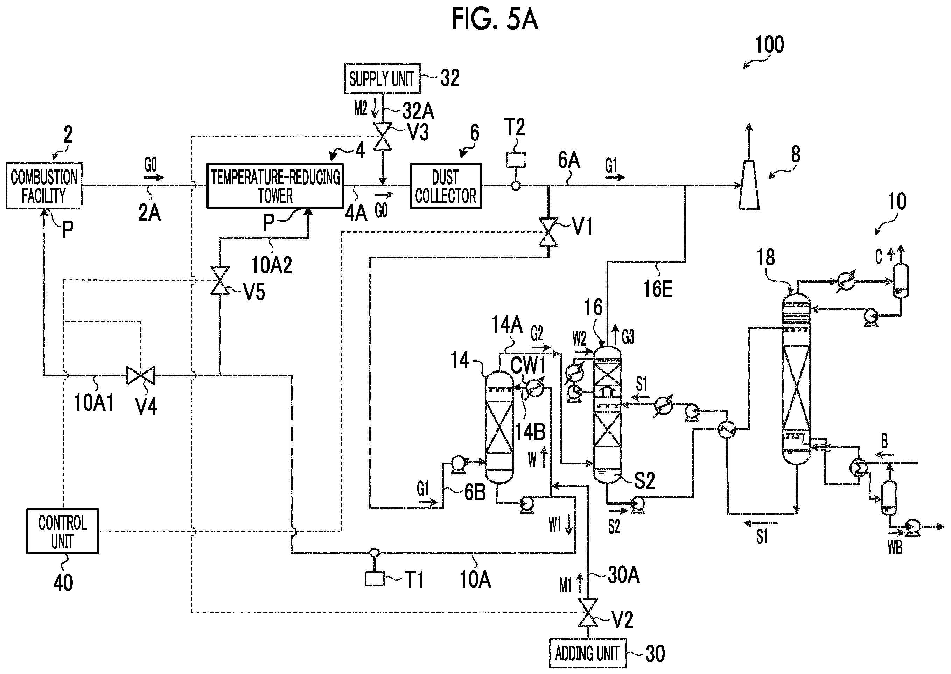

Fig. 5A is a schematic block diagram of a CO₂ recovery system according to the second embodiment. In the second embodiment, the cooling water introduction line 10A is provided with the adjustment unit that adjusts the supply amount of the cooling water W1 to the supply location P. Specifically, the cooling water introduction line 10A1 is provided with the adjustment unit V4. The adjustment unit V4 is an openable/closable valve in the present embodiment, and introduces the cooling water W1 into the combustion facility 2 in an opened state and stops the introduction of the cooling water W1 into the combustion facility 2 in a closed state. In addition, the adjustment unit V4 can adjust the flow rate of the cooling water W1 to be introduced into the combustion facility 2 by adjusting the opening degree thereof. The adjustment unit V4 may be controlled by the control unit 40. The control unit 40 controls the adjustment unit V4 to control the flow rate of the cooling water W1 to be introduced into the combustion facility 2 through the adjustment unit V4. The control unit 40 may adjust the flow rate of the cooling water W1, for example, according to the combustion state in the combustion facility 2. In this case, for example, the control unit 40 may increase the flow rate of the cooling water W1 to be introduced into the combustion facility 2 as the combustion amount in the combustion facility 2 increases (for example, as the introduction amount of the fuel F increases). In addition, the control unit 40 may increase the flow rate of the cooling water W1 to be introduced into the combustion facility 2, for example, as the combustion temperature in the combustion facility 2 increases. Further, for example, the control unit 40 may maintain the flow rate of the cooling water W1 at a predetermined value in a case where the combustion temperature of the combustion facility 2 is equal to or lower than a predetermined threshold value, and may increase the flow rate of the cooling water W1 to be introduced into the combustion facility 2 beyond the predetermined value in a case where the combustion temperature of the combustion facility 2 exceeds the threshold value. The adjustment unit V4 is not limited to the valve and may be any mechanism capable of adjusting the supply amount of the cooling water W1. In addition, the combustion state in the combustion facility 2 may be acquired by any method and may be acquired by a sensor that detects the combustion state, for example.

The cooling water introduction line 10A2 is provided with the adjustment unit V5. The adjustment unit V5 is an openable/closable valve in the present embodiment, and introduces the cooling water W1 into the temperature-reducing tower 4 in an opened state and stops the introduction of the cooling water W1 into the temperature-reducing tower 4 in a closed state. In addition, the adjustment unit V5 can adjust the flow rate of the cooling water W1 to be introduced into the temperature-reducing tower 4 by adjusting the opening degree thereof. The adjustment unit V5 may be controlled by the control unit 40. The control unit 40 controls the adjustment unit V5 to control the flow rate of the cooling water W1 to be introduced into the temperature-reducing tower 4 through the adjustment unit V5. The control unit 40 may adjust the flow rate of the cooling water W1, for example, according to at least one of the flow rate and the temperature of the exhaust gas G0 to be introduced into the temperature-reducing tower 4. In this case, for example, the control unit 40 may increase the flow rate of the cooling water W1 to be introduced into the temperature-reducing tower 4 as the amount of the exhaust gas G0 to be introduced into the temperature-reducing tower 4 increases. In addition, the control unit 40 may increase the flow rate of the cooling water W1 to be introduced into the temperature-reducing tower 4, for example, as the temperature of the exhaust gas G0 to be introduced into the temperature-reducing tower 4 increases. Further, for example, the control unit 40 may maintain the flow rate of the cooling water W1 at a predetermined value in a case where the temperature of the exhaust gas G0 is equal to or lower than a predetermined threshold value, and may increase the flow rate of the cooling water W1 to be introduced into the temperature-reducing tower 4 beyond the predetermined value in a case where the temperature of the exhaust gas G0 exceeds the threshold value. The adjustment unit V5 is not limited to the valve and may be any mechanism capable of adjusting the supply amount of the cooling water W1. In addition, the flow rate or the temperature of the exhaust gas G0 may be acquired by any method and for example, may be acquired by a sensor that detects the flow rate or the temperature of the exhaust gas G0.

The control unit 40 may prioritize the supply of the cooling water W1 to the combustion facility 2 over the supply of the cooling water W1 to the temperature-reducing tower 4. That is, for example, in a case where the flow rate of the cooling water W1 to be introduced into the cooling water introduction line 10A (that is, the flow rate of the cooling water W increased in the exhaust gas cooling device 14) is smaller than the total value of the requested flow rates of the cooling water W1 in the combustion facility 2 and the temperature-reducing tower 4, the control unit 40 may adjust the supply flow rates to the combustion facility 2 and the temperature-reducing tower 4 such that the supply flow rate to the combustion facility 2 is closer to the requested flow rate than the supply flow rate to the temperature-reducing tower 4 is. In other words, the control unit 40 may adjust the supply flow rates to the combustion facility 2 and the temperature-reducing tower 4 such that a value obtained by subtracting the supply flow rate from the requested flow rate of the combustion facility 2 is smaller than a value obtained by subtracting the supply flow rate from the requested flow rate of the temperature-reducing tower 4.

In the second embodiment, the cooling water W1 inside the exhaust gas cooling device 14 may be supplied to any one of the combustion facility 2 and the temperature-reducing tower 4, as in the first embodiment.

In the second embodiment, since the supply amount of the cooling water W1 is controlled based on the combustion degree of the combustion facility 2, the flow rate or the temperature of the exhaust gas G0, or the like as described above, the exhaust gas can be appropriately treated while the cooling water W1 can also be appropriately treated.

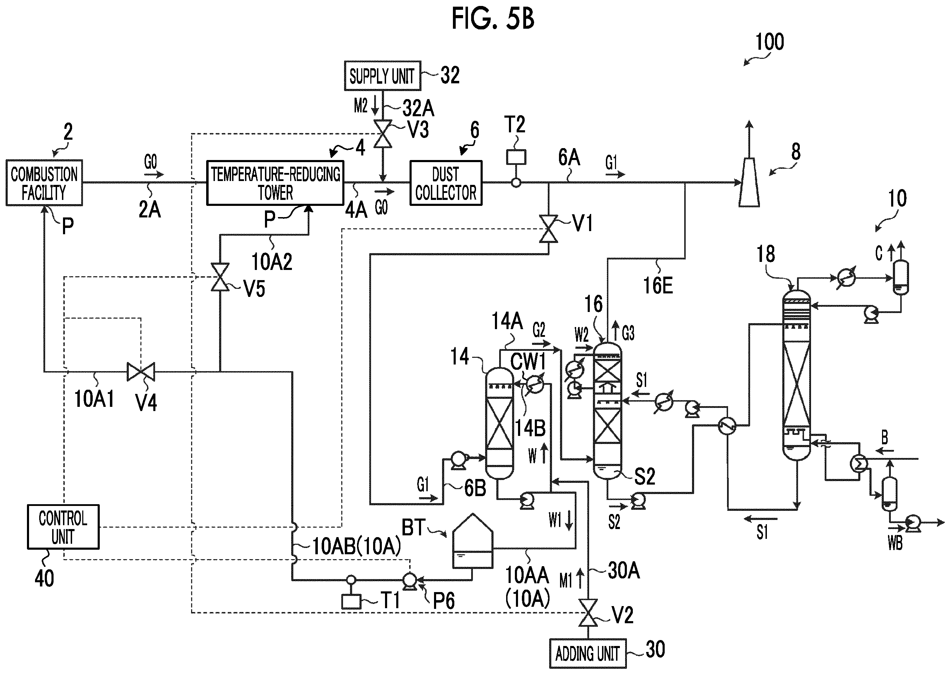

Fig. 5B is a schematic block diagram of a CO₂ recovery system according to another example of the second embodiment. As shown in Fig. 5B, the cooling water introduction line 10A may be provided with a buffer tank BT that temporarily stores the cooling water W1 corresponding to the increased flow rate inside the exhaust gas cooling device 14. By providing the buffer tank BT, it is possible to more suitably suppress an increase in the cooling water W1 inside the exhaust gas cooling device 14. In this case, for example, the cooling water W1 is introduced into the buffer tank BT from a cooling water introduction line 10AA, which is a portion upstream of the buffer tank BT on the cooling water introduction line 10A, and the cooling water W1 is then stored in the buffer tank BT. In addition, in the example of Fig. 5B, a cooling water introduction line 10AB, which is a portion downstream of the buffer tank BT on the cooling water introduction line 10A, is connected to a bottom portion of the buffer tank BT. The cooling water introduction line 10AB is provided with a pump P6 which is a mechanism that adjusts the flow rate in the buffer tank BT. The control unit 40 controls the pump P6 to lead out the cooling water W1 stored in the buffer tank BT to the cooling water introduction lines 10A1 and 10A2 via the cooling water introduction line 10AB. Consequently, the flow rate in the buffer tank BT is adjusted. The connection location of the cooling water introduction line 10AB is not limited to a bottom surface of the buffer tank BT and may be any location. In addition, the pump P6 is not an essential configuration, and any device other than the pump may be provided to adjust the flow rate in the buffer tank BT.

### (Third Embodiment)

Next, a third embodiment will be described. The third embodiment is different from the second embodiment in that the flow rate of the cooling water W1 to be supplied to the cooling water introduction line 10A is controlled. In the third embodiment, description of the parts with a configuration common to the second embodiment will not be repeated. The third embodiment can also be applied to the first embodiment.

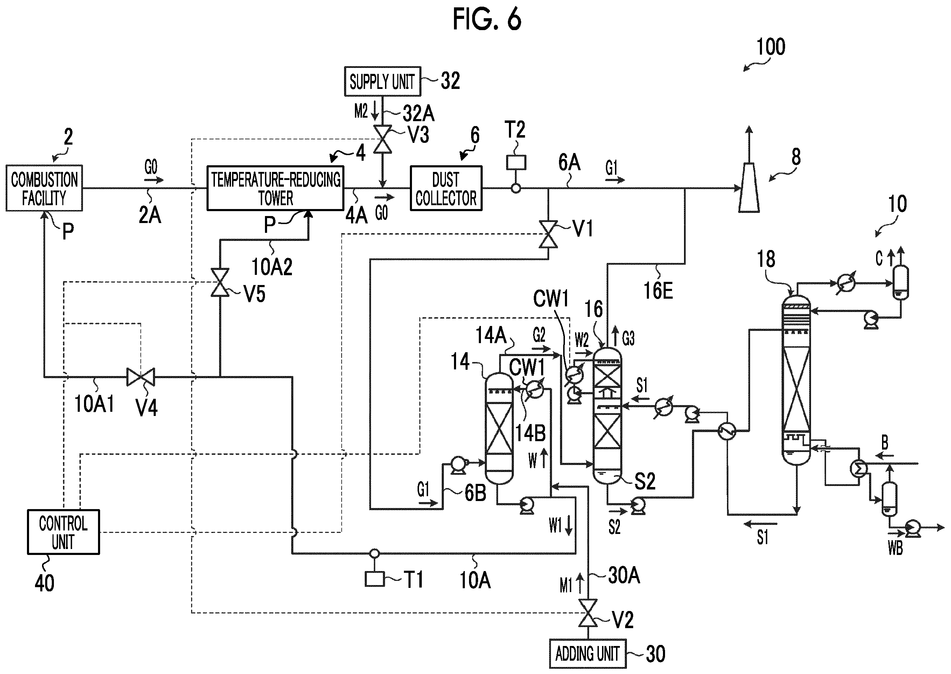

Fig. 6 is a schematic block diagram of a CO₂ recovery system according to the third embodiment. As described above, the cooling water W1 corresponding to the increased flow rate of the cooling water W in the exhaust gas cooling device 14 is introduced into the cooling water introduction line 10A. In the third embodiment, the flow rate of the cooling water W1 to be introduced into the cooling water introduction line 10A is adjusted by adjusting the amount of increase in the cooling water W in the exhaust gas cooling device 14 according to the required flow rate of the cooling water W1 that should be introduced into the supply location P. Specifically, the control unit 40 adjusts the temperature (hereinafter, referred to as an exhaust gas outlet temperature) of the exhaust gas G1 to be discharged from the exhaust gas cooling device 14 by controlling an operating condition of the exhaust gas cooling device 14 based on the required flow rate of the cooling water W1 to be introduced into the supply location P. When the exhaust gas outlet temperature changes, the amount of decrease in the temperature of the exhaust gas G1 (a difference between the exhaust gas outlet temperature and the temperature of the exhaust gas at the inlet of the exhaust gas cooling device 14) in the exhaust gas cooling device 14 changes, so that the amount of the condensed water of the exhaust gas G1 changes, and the flow rate of the cooling water W1 to be introduced into the cooling water introduction line 10A also changes.

The operating condition of the exhaust gas cooling device 14 for adjusting the exhaust gas outlet temperature may be at least one of the temperature of the cooling water W to be brought into contact with the exhaust gas G1 (the cooling water W to be returned to the exhaust gas cooling device 14) and the flow rate per unit time of the cooling water W to be brought into contact with the exhaust gas G1, and in the present embodiment, the operating condition is the temperature of the cooling water W to be brought into contact with the exhaust gas G1. By changing the temperature or the flow rate per unit time of the cooling water W, the exhaust gas outlet temperature can be appropriately changed. The control unit 40 controls the temperature of the cooling water W by controlling, for example, the cooler CW1. In addition, for example, the control unit 40 controls the flow rate per unit time of the cooling water W to be returned to the exhaust gas cooling device 14 by adjusting the opening degree of a valve (not shown) that is provided on the cooling line 14B and that adjusts the flow rate of the cooling water W. The operating condition for adjusting the exhaust gas outlet temperature is not limited thereto and may be any parameter capable of changing the exhaust gas outlet temperature.

In the present embodiment, the control unit 40 controls the operating condition of the exhaust gas cooling device 14 based on the actual supply amount of the cooling water W1 and the required flow rate of the cooling water. The actual supply amount of the cooling water W1 is the flow rate of the cooling water W1 to be actually introduced into the cooling water introduction line 10A, and the required supply amount of the cooling water is the flow rate of the cooling water that should be supplied to the supply location P (here, the combustion facility 2 or the temperature-reducing tower 4). Hereinafter, a specific control flow of the operating condition of the exhaust gas cooling device 14 will be described.

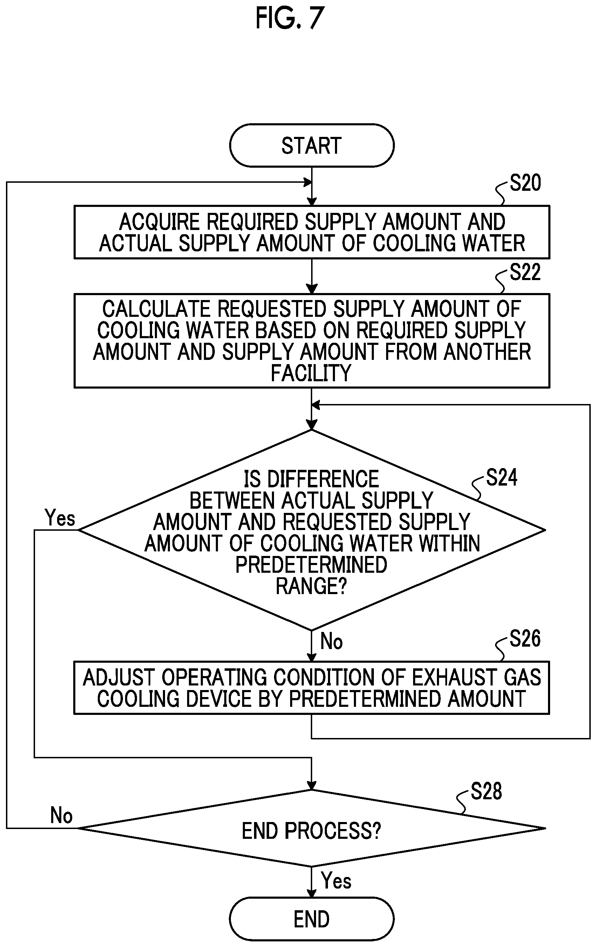

Fig. 7 is a flowchart illustrating a control flow of the operating condition according to the third embodiment. As shown in Fig. 7, the control unit 40 acquires the required supply amount of the cooling water and the actual supply amount of the cooling water W1 (step S20). The control unit 40 may acquire the required supply amount by any method, or may calculate the required supply amount, for example, based on the combustion state of the combustion facility 2, the flow rate of the exhaust gas G0 to be introduced into the temperature-reducing tower 4, the temperature of the exhaust gas G0 to be introduced into the temperature-reducing tower 4, or the like. In addition, for example, the required supply amount may be set in advance, and the control unit 40 may acquire information on the required supply amount set in advance. The control unit 40 may acquire the actual supply amount by any method. For example, the control unit 40 acquires information on the supply amount of the cooling water W1 measured by the sensor T1 as the actual supply amount.

The control unit 40 calculates a requested supply amount of the cooling water W1 based on the required supply amount of the cooling water and the supply amount of the cooling water from another facility (step S22). The supply amount of the cooling water from another facility indicates the amount of the cooling water to be supplied to the supply location P from a facility other than the exhaust gas cooling device 14. The control unit 40 may acquire the supply amount of the cooling water from another facility by any method or may acquire, for example, information on the supply amount of the cooling water from the other facility, which is set in advance. The requested supply amount of the cooling water W1 indicates the flow rate of the cooling water W1 that should be supplied to the supply location P. The control unit 40 calculates a value obtained by subtracting the supply amount of the cooling water from the other facility from the required supply amount of the cooling water as the requested supply amount of the cooling water W1. In a case where no cooling water is supplied to the supply location P from another facility, the required supply amount of the cooling water is the requested supply amount of the cooling water W1.

The control unit 40 determines whether the difference between the actual supply amount of the cooling water W1 and the requested supply amount of the cooling water W1 is within a predetermined range (step S24). The predetermined range herein may be set to any range. In a case where the difference between the actual supply amount and the requested supply amount of the cooling water W1 is not within the predetermined range (step S24: No), that is, in a case where the difference is outside the predetermined range, the control unit 40 adjusts the operating condition of the exhaust gas cooling device 14 by a predetermined amount (step S26). For example, in a case where the actual supply amount is smaller than the requested supply amount, the control unit 40 controls the temperature of the cooling water W to be brought into contact with the exhaust gas G1 to decrease by a predetermined value, or controls the flow rate per unit time of the cooling water W to be brought into contact with the exhaust gas G1 to increase by a predetermined value. By lowering the temperature of the cooling water W or raising the flow rate per unit time, the exhaust gas outlet temperature decreases, and the actual supply amount increases, so that the difference between the actual supply amount and the requested supply amount can be reduced. On the other hand, in a case where the actual supply amount is larger than the requested supply amount, the control unit 40 controls the temperature of the cooling water W to be brought into contact with the exhaust gas G1 to increase by a predetermined value, or controls the flow rate per unit time of the cooling water W to be brought into contact with the exhaust gas G1 to decrease by a predetermined value. By raising the temperature of the cooling water W or lowering the flow rate per unit time, the exhaust gas outlet temperature increases, and the actual supply amount decreases, so that the difference between the actual supply amount and the requested supply amount can be reduced. When step S26 is executed, the process returns to step S24, and this process is continued until the difference between the actual supply amount and the requested supply amount is equal to or less than a threshold value.

Meanwhile, in a case where the difference between the actual supply amount and the requested supply amount is within the predetermined range (step S24; Yes), the process proceeds to step S28, and this process is ended in a case where the process is to be ended (step S28; Yes), and the process returns to step S20 and this process is continued in a case where this process is not to be ended (step S28; No).

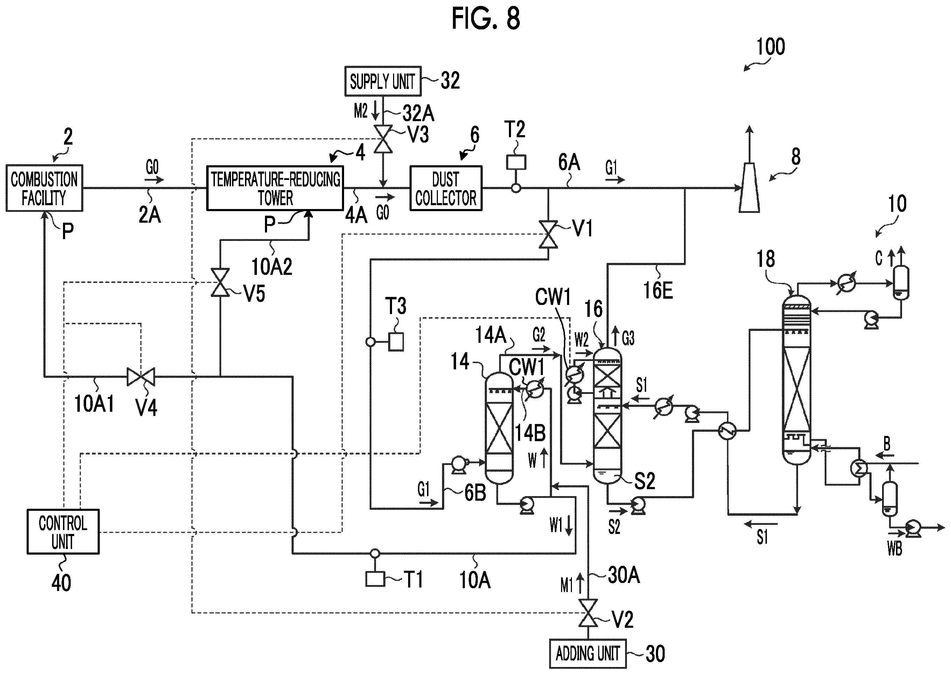

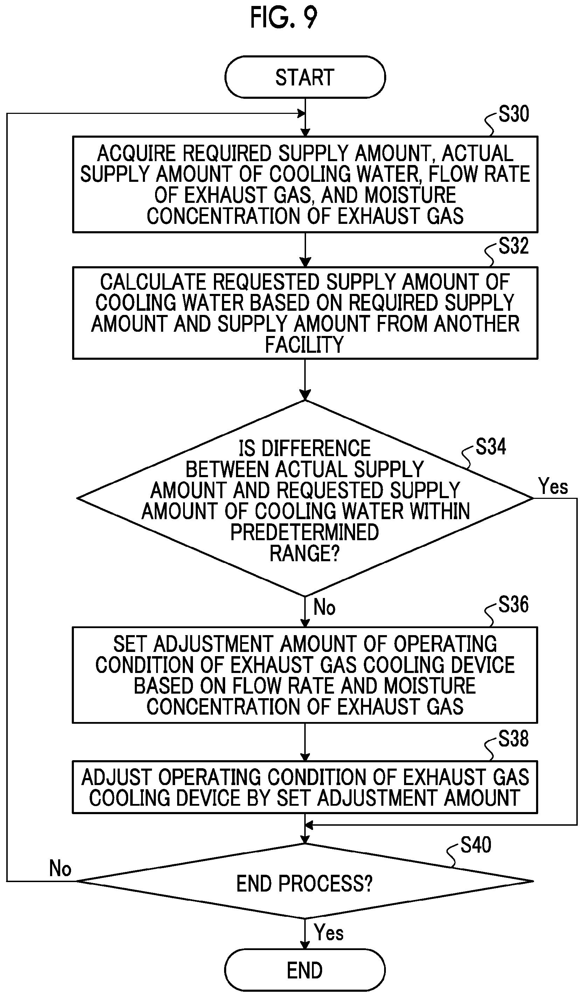

Fig. 8 is a schematic block diagram of a CO₂ recovery system according to another example of the third embodiment, and Fig. 9 is a flowchart illustrating a control flow of an operating condition according to another example of the third embodiment. The control unit 40 may control the operating condition of the exhaust gas cooling device 14 based on the flow rate of the exhaust gas G1 to be introduced into the exhaust gas cooling device 14 in addition to the actual supply amount of the cooling water W1 and the required flow rate of the cooling water. In this case, as shown in Fig. 8, the exhaust gas introduction line 6B is provided with a sensor T3. The sensor T3 is a sensor that measures the flow rate and the moisture concentration of the exhaust gas G1 that is to be introduced into the exhaust gas cooling device 14 by flowing through the exhaust gas introduction line 6B. In the present example, as shown in Fig. 9, the control unit 40 acquires the required supply amount of the cooling water, the actual supply amount of the cooling water W1, and the flow rate and the moisture concentration of the exhaust gas G1 to be introduced into the exhaust gas cooling device 14 (step S30). The moisture concentration of the exhaust gas G1 indicates the concentration of the moisture contained in the exhaust gas G1. The control unit 40 acquires the flow rate and the moisture concentration of the exhaust gas G1 measured by the sensor T3 as the flow rate and the moisture concentration of the exhaust gas G1 to be introduced into the exhaust gas cooling device 14. The method for acquiring the required supply amount and the actual supply amount may be the same as those described above.

The control unit 40 calculates the requested supply amount of the cooling water W1 based on the required supply amount of the cooling water and the supply amount of the cooling water from another facility (step S32), and determines whether the difference between the actual supply amount of the cooling water W1 and the requested supply amount of the cooling water W1 is equal to or less than a predetermined threshold value (step S34).

In a case where the difference between the actual supply amount and the requested supply amount of the cooling water W1 is not within the predetermined range (step S34; No), that is, in a case where the difference is outside the predetermined range, the control unit 40 sets the adjustment amount of the operating condition of the exhaust gas cooling device 14 based on the flow rate and the moisture concentration of the exhaust gas G1 and the actual supply amount of the cooling water W1 (step S36). Specifically, the control unit 40 calculates an outlet moisture amount, which is a moisture amount contained in the exhaust gas G1 to be discharged from the exhaust gas cooling device 14, based on the flow rate and the moisture concentration of the exhaust gas G1 and the actual supply amount of the cooling water W1, and sets the adjustment amount of the operating condition of the exhaust gas cooling device 14 based on the outlet moisture amount. That is, the control unit 40 calculates the adjustment amount of the temperature of the cooling water W (that is, the amount of change in the temperature for achieving the target temperature of the cooling water W) to ensure that the difference between the actual supply amount and the requested supply amount of the cooling water W1 is equal to or less than a predetermined value, based on the outlet moisture amount.

The control unit 40 uses the following Equation (1) to calculate the outlet moisture amount, which is the moisture amount contained in the exhaust gas G1 to be discharged from the exhaust gas cooling device 14.${GW}_{out} = {G}_{in} \cdot {GW}_{in} / 100 - {W 1}_{out}$

Here, GWₒᵤₜ is the outlet moisture amount (Nm³/h), Gᵢₙ is the flow rate (Nm³/h) of the exhaust gas G1 to be introduced into the exhaust gas cooling device 14, GWᵢₙ is the moisture concentration (vol%) of the exhaust gas G1 to be introduced into the exhaust gas cooling device 14, and W1ₒᵤₜ is the actual supply amount of the cooling water W1. That is, the control unit 40 calculates an inlet moisture amount, which is a moisture amount contained in the exhaust gas G1 to be introduced into the exhaust gas cooling device 14, from the flow rate and the moisture concentration of the exhaust gas G1, and calculates a value obtained by subtracting the actual supply amount of the cooling water W1 from the inlet moisture amount as the outlet moisture amount.

When the adjustment amount of the operating condition of the exhaust gas cooling device 14 is set, the control unit 40 adjusts the operating condition of the exhaust gas cooling device 14 by the set adjustment amount (step S38). In the present example, since the adjustment amount of the operating condition is set based on the outlet moisture amount such that the difference between the actual supply amount and the requested supply amount of the cooling water W1 is equal to or less than the predetermined value, it is not necessary to perform the adjustment of the operating condition a plurality of times as in the control of Fig. 7.

As described above, in the third embodiment, the operating condition of the exhaust gas cooling device 14 is controlled based on the required flow rate of the cooling water, so that the cooling water W1 having an amount corresponding to the requested supply amount can be supplied.

### (Fourth Embodiment)

Next, a fourth embodiment will be described. The fourth embodiment is different from the third embodiment in that the cooling water W1 is heated. In the fourth embodiment, description of the parts with a configuration common to the third embodiment will not be repeated. The fourth embodiment can also be applied to the first embodiment and the second embodiment.

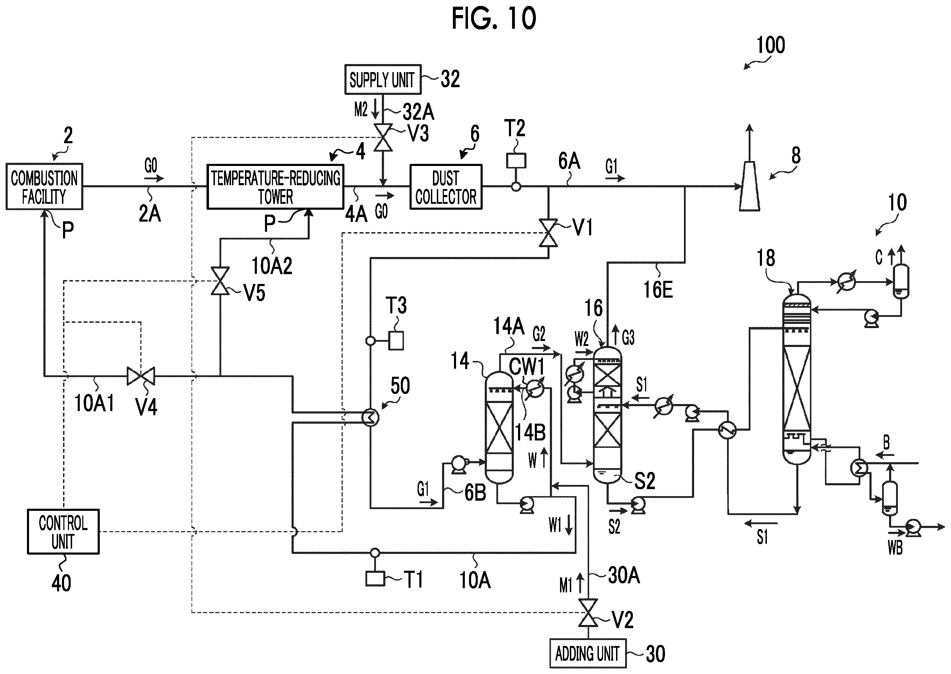

Fig. 10 is a schematic block diagram of a CO₂ recovery system according to the fourth embodiment. As shown in Fig. 10, the CO₂ recovery system 100 according to the fourth embodiment includes a heating section 50 (first heating section) that heats the cooling water W1. The heating section 50 exchanges heat between the exhaust gas G1 before being introduced into the exhaust gas cooling device 14 and the cooling water W1 introduced into the cooling water introduction line 10A to heat the cooling water W1. As shown in Fig. 10, the heating section 50 may be provided to transfer the heat of the exhaust gas G1 passing through the exhaust gas introduction line 6B to the cooling water W1 passing through the cooling water introduction line 10A. For example, the heating section 50 may have a configuration in which the exhaust gas G1 passing through the exhaust gas introduction line 6B comes into contact with an outer peripheral surface of the cooling water introduction line 10A, with the cooling water introduction line 10A passing through the inside of the heating section 50. Consequently, the heat of the exhaust gas G1 is transferred from the outer peripheral surface of the cooling water introduction line 10A to the cooling water W1 inside the cooling water introduction line 10A, thereby heating the cooling water W1. In addition, heat exchange may be performed via a heat medium. In this case, for example, the heating section 50 may cause the heat medium to flow through the outer peripheral surface of the exhaust gas introduction line 6B and the outer peripheral surface of the cooling water introduction line 10A. The heat medium is heated by the exhaust gas G1 on the outer peripheral surface of the exhaust gas introduction line 6B and heats the cooling water W1 on the outer peripheral surface of the cooling water introduction line 10A.

The cooling water W1 is not limited to being heated by the heat of the exhaust gas G1 and may be heated by any method. For example, the heating section 50 may heat the cooling water W1 using the exhaust gas G0 as a heat source or may heat the cooling water W1 using a heat source other than the heat of the exhaust gas.

By heating the cooling water W1, the temperature of the cooling water W1 to be introduced into the combustion facility 2 or the temperature-reducing tower 4 is increased, and the flow rate of the cooling water W1 required to achieve the target temperature of the combustion facility or the target temperature of the exhaust gas G1 is increased, so that the amount of the cooling water W1 to be supplied can be increased, and a large amount of the cooling water W1 can be treated.

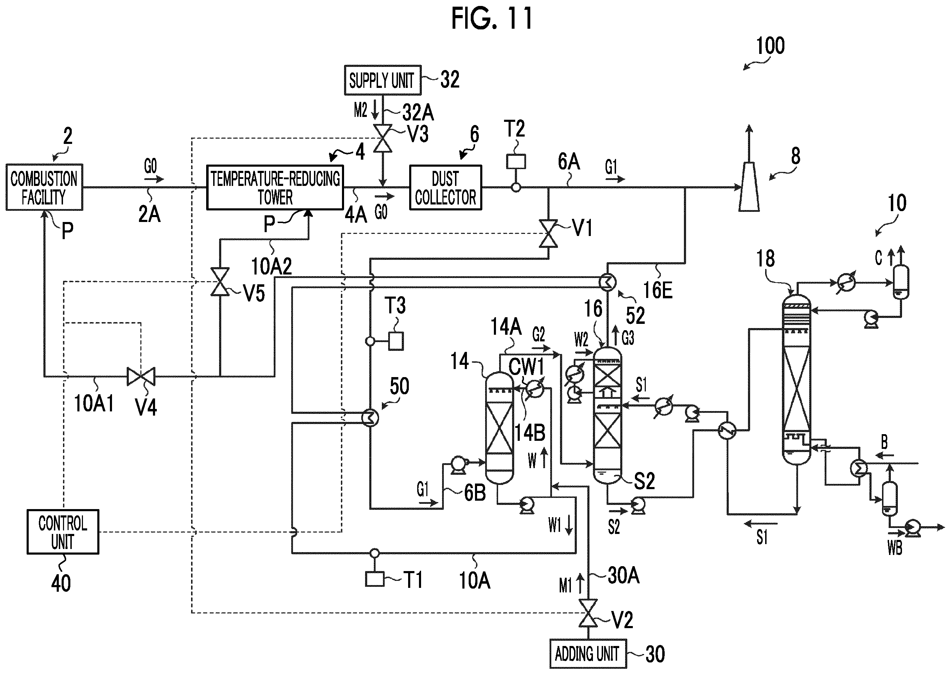

Fig. 11 is a schematic block diagram of a CO₂ recovery system according to another example of the fourth embodiment. In the present example, the CO₂ recovery system 100 includes a heating section 52 (second heating section) that uses the cooling water W1 heated in the heating section 50 to heat the decarbonated gas G3 in which CO₂ has been removed in the CO₂ recovery section 16A. In the example of Fig. 11, the heating section 52 is connected downstream of the connection location of the heating section 50 in the flow direction of the cooling water W1 on the cooling water introduction line 10A. The heating section 52 is provided to transfer the heat of the cooling water W1 heated in the heating section 50 through the cooling water introduction line 10A to the decarbonated gas G3 passing through the decarbonated gas introduction line 16E. For example, the heating section 52 may have a configuration in which the cooling water W1 passing through the cooling water introduction line 10A comes into contact with an outer peripheral surface of the decarbonated gas introduction line 16E, with the decarbonated gas introduction line 16E passing through the inside of the heating section 52. As a result, the heat of the cooling water W1 is transferred from the outer peripheral surface of the decarbonated gas introduction line 16E to the decarbonated gas G3 inside the decarbonated gas introduction line 16E, thereby heating the decarbonated gas G3.

As in the example shown in Fig. 11, by heating the cooling water W1 with the heating section 50 and heating the decarbonated gas G3 with the heating section 52, the heated cooling water W1 is supplied to the supply location P, and the heated decarbonated gas G3 is introduced into the chimney 8. Therefore, it is possible to appropriately suppress the white smoke of the exhaust gas while treating a large amount of the cooling water W1.

### (Effects)

As described above, the CO₂ recovery system 100 according to the present disclosure includes the combustion facility 2, the dust collector 6, the exhaust gas cooling device 14, the CO₂ absorption tower 16, and the cooling water introduction line 10A. The dust collector 6 removes the solid component from the exhaust gas G0 containing CO₂, which is discharged from the combustion facility 2 and introduced into the dust collector 6. The exhaust gas cooling device 14 brings the exhaust gas G1, which is introduced into the exhaust gas cooling device 14, into contact with the cooling water W to cool the exhaust gas G1. The CO₂ absorption tower 16 brings the exhaust gas G2, which is cooled by the exhaust gas cooling device 14 and introduced into the CO₂ absorption tower 16, into contact with the CO₂ absorption liquid to remove the CO₂ from the exhaust gas G2. The cooling water introduction line 10A is connected to the exhaust gas cooling device 14 and the supply location P, which is a location upstream of the dust collector 6 in the flow of the exhaust gas G0, and allows at least a portion (cooling water W1) of the cooling water W inside the exhaust gas cooling device 14 to be introduced into the supply location P.

With the CO₂ recovery system 100 according to the present disclosure, the cooling water W1 inside the exhaust gas cooling device 14 is introduced into the supply location P such as the combustion facility 2 or the temperature-reducing tower 4. Therefore, it is possible to appropriately treat the cooling water W1 while suppressing an excessive increase in the flow rate of the cooling water W inside the exhaust gas cooling device 14.

It is preferable that the cooling water W1 to be introduced into the supply location P contains condensed water in which the moisture in the exhaust gas G1 is condensed. With the CO₂ recovery system 100 according to the present disclosure, the condensed water of the exhaust gas G1 can be appropriately treated.

It is preferable that the cooling water introduction line 10A is connected to the exhaust gas cooling device 14 and the combustion facility 2 allows at least a portion of the cooling water W inside the exhaust gas cooling device 14 to be introduced into the combustion facility 2. With the CO₂ recovery system 100 according to the present disclosure, the cooling water W1 is introduced into the combustion facility 2, so that it is possible to appropriately perform the combustion in the combustion facility 2 while appropriately treating the cooling water W1.

It is preferable that the CO₂ recovery system 100 according to the present disclosure further includes the control unit 40 that controls the amount of the cooling water W1 to be introduced from the exhaust gas cooling device 14 into the combustion facility 2. The control unit 40 controls the amount of the cooling water W1 to be introduced into the combustion facility 2 according to the combustion state in the combustion facility 2. With the CO₂ recovery system 100 according to the present disclosure, the supply amount of the cooling water W1 is controlled according to the combustion state in the combustion facility 2, so that it is possible to appropriately perform the combustion in the combustion facility 2.

It is preferable that the CO₂ recovery system 100 according to the present disclosure further includes the temperature-reducing tower 4 that is provided between the combustion facility 2 and the dust collector 6 in the flow of the exhaust gas G0 and cools the exhaust gas G0, and the cooling water introduction line 10A is connected to the exhaust gas cooling device 14 and the temperature-reducing tower 4 and allows at least a portion of the cooling water W inside the exhaust gas cooling device 14 to be introduced into the temperature-reducing tower 4. With the CO₂ recovery system 100 according to the present disclosure, the cooling water W1 is introduced into the temperature-reducing tower 4, so that it is possible to appropriately cool the exhaust gas G0 in the temperature-reducing tower 4 while appropriately treating the cooling water W1.

It is preferable that the CO₂ recovery system 100 according to the present disclosure further includes the control unit 40 that controls the amount of the cooling water W1 to be introduced from the exhaust gas cooling device 14 into the temperature-reducing tower 4. The control unit 40 controls the amount of the cooling water W1 to be introduced into the temperature-reducing tower 4 according to at least one of the flow rate and the temperature of the exhaust gas G1 to be introduced into the temperature-reducing tower 4. With the CO₂ recovery system 100 according to the present disclosure, the supply amount of the cooling water W1 is controlled according to the flow rate or the temperature of the exhaust gas G1, so that it is possible to appropriately cool the exhaust gas G0 in the temperature-reducing tower 4.

It is preferable that the CO₂ recovery system 100 according to the present disclosure further includes the adding unit 30 that adds the pH adjuster M1 for adjusting the pH of the cooling water W to the cooling water W. According to the present disclosure, the pH of the cooling water W is adjusted, so that it is possible to appropriately cool the exhaust gas G1.

It is preferable that the CO₂ recovery system 100 according to the present disclosure further includes the supply unit 32 that is provided downstream of the combustion facility 2 in the flow of the exhaust gas G0 and supplies the exhaust gas G0 with the acidic gas remover M2 for removing the acidic gas contained in the exhaust gas G0. According to the present disclosure, the acidic gas contained in the exhaust gas G0 is removed, so that it is possible to appropriately treat the exhaust gas. In addition, by introducing the cooling water W1 into the supply location P, the acidic gas can also be removed by the cooling water W1, so that it is possible to reduce the supply amount of the acidic gas remover M2.

It is preferable that the CO₂ recovery system 100 according to the present disclosure further includes the control unit 40 that controls the supply amount of the acidic gas remover M2. According to the present disclosure, by controlling the supply amount of the acidic gas remover M2, it is possible to appropriately treat the exhaust gas.

It is preferable that the control unit 40 controls the supply amount of the acidic gas remover M2 based on the flow rate and the pH of the cooling water W1 to be introduced into the supply location P. By controlling the supply amount of the acidic gas remover M2 based on the flow rate and the pH of the cooling water W1, it is possible to appropriately treat the exhaust gas while reducing the supply amount of the acidic gas remover M2.

It is preferable that the control unit 40 controls the supply amount of the acidic gas remover M2 based on the concentration of an impurity contained in the exhaust gas downstream of the location to which the supply unit 32 is connected. By controlling the supply amount of the acidic gas remover M2 based on the concentration of the impurity, it is possible to appropriately treat the exhaust gas while reducing the supply amount of the acidic gas remover M2.

It is preferable that the control unit 40 controls the operating condition of the exhaust gas cooling device 14 based on the required flow rate of the cooling water to be introduced into the supply location P to adjust the temperature (exhaust gas outlet temperature) of the exhaust gas G2 to be discharged from the exhaust gas cooling device 14 and adjusts the flow rate of the cooling water W1 to be introduced into the cooling water introduction line 10A. By controlling the operating condition of the exhaust gas cooling device 14 based on the required flow rate to adjust the temperature of the exhaust gas G2, the flow rate of the cooling water W1 is controlled, so that an appropriate amount of the cooling water W1 can be supplied to the supply location P.

It is preferable that the control unit 40 controls at least one of the temperature of the cooling water W to be brought into contact with the exhaust gas G1 and the flow rate per unit time of the cooling water W to be brought into contact with the exhaust gas G1 as the operating condition of the exhaust gas cooling device 14. By controlling at least one of the temperature and the flow rate of the cooling water W, the temperature of the exhaust gas G2 is appropriately adjusted, so that it is possible to supply an appropriate amount of the cooling water W1 to the supply location P.

The cooling water W1 having a flow rate corresponding to the flow rate of the cooling water W increased inside the exhaust gas cooling device 14 is introduced into the cooling water introduction line 10A, and the control unit 40 controls the operating condition of the exhaust gas cooling device 14 based on the flow rate of the cooling water W1 to be introduced into the cooling water introduction line 10A and the required flow rate of the cooling water. According to the present disclosure, by controlling the operating condition based on the actual flow rate of the cooling water W1 and the required flow rate, it is possible to supply an appropriate amount of the cooling water W1 to the supply location P.

It is preferable that the control unit 40 controls the operating condition of the exhaust gas cooling device 14 based on the flow rate of the exhaust gas G1 to be introduced into the exhaust gas cooling device 14. According to the present disclosure, by controlling the operating condition based on the flow rate of the exhaust gas G1, it is possible to supply an appropriate amount of the cooling water W1 to the supply location P.

It is preferable that the CO₂ recovery system 100 according to the present disclosure further includes the heating section 50 (first heating section) that exchanges heat between the exhaust gas G1 before being introduced into the exhaust gas cooling device 14 and the cooling water W1 introduced into the cooling water introduction line 10A to heat the cooling water W1. By heating the cooling water W1, the flow rate of the cooling water W1 required to achieve the target temperature of the combustion facility or the target temperature of the exhaust gas G1 is increased, so that the amount of the cooling water W1 to be supplied can be increased, and a large amount of the cooling water W1 can be treated. It can be said that the heating section 50 may exchange heat between the cooling water W1 and the exhaust gas located at any position upstream of the CO₂ absorption tower 16 in the flow of the exhaust gas, or may exchange heat between the cooling water W1 and the exhaust gas located at any position upstream of the exhaust gas cooling device 14 in the flow of the exhaust gas.

It is preferable that the CO₂ recovery system 100 according to the present disclosure further includes the heating section 50 (second heating section) that exchanges heat between the cooling water W1 heated in the heating section 50 and the decarbonated gas G3, which is the exhaust gas G2 from which the CO₂ has been removed in the CO₂ absorption tower 16, to heat the decarbonated gas G3. By heating the decarbonated gas G3, it is possible to appropriately suppress the white smoke of the exhaust gas while treating a large amount of cooling water W1.

It is preferable that the buffer tank BT that stores the cooling water W1 corresponding to an increased flow rate in the exhaust gas cooling device 14 is provided on the cooling water introduction line 10A. By providing the buffer tank BT, it is possible to appropriately suppress an excessive increase in the flow rate of the cooling water W1 inside the exhaust gas cooling device 14.

The CO₂ recovery method according to the present disclosure includes a step of generating the exhaust gas G0 containing CO₂ by combusting in the combustion facility 2; a step of removing a solid component from the exhaust gas G0 discharged from the combustion facility 2, through the dust collector 6; a step of bringing the exhaust gas G1 into contact with cooling water W to cool the exhaust gas G1, through the exhaust gas cooling device 14; a step of bringing the exhaust gas G2 cooled by the exhaust gas cooling device 14 into contact with the CO₂ absorption liquid to remove the CO₂ from the exhaust gas G2; and a step of introducing at least a portion of the cooling water W inside the exhaust gas cooling device 14 to the supply location P, which is a location upstream of the dust collector 6 in the flow of the exhaust gas G0.

Although the embodiments of the present invention have been described above, the embodiments are not limited by the contents of the embodiments. In addition, the above-described components include those that can be easily assumed by those skilled in the art, those that are substantially the same, and those that are within a so-called equivalent range. Further, the above-described components can be combined as appropriate. Furthermore, various omissions, replacements, or modifications of the above-described components can be made without departing from the concept of the above-described embodiments.

### Reference Signs List

2: combustion facility
3: exhaust gas treatment facility
4: temperature-reducing tower
6: dust collector
10: CO₂ recovery apparatus
10A: cooling water introduction line
14: exhaust gas cooling device
16: CO₂ absorption tower
G0, G1, G2: exhaust gas
W, W1: cooling water

## Claims

1. A CO₂ recovery system comprising:
a combustion facility (2);
a dust collector (6) that is configured to remove a solid component from an exhaust gas (G0, G1, G2) containing CO₂, the exhaust gas (G0, G1, G2) being discharged from the combustion facility (2) and introduced into the dust collector (6);
an exhaust gas cooling device (14) that is configured to bring the exhaust gas (G0, G1, G2), which is introduced into the exhaust gas cooling device (14), into contact with cooling water (W, W1) to cool the exhaust gas (G0, G1, G2); and
a CO₂ absorption tower (16) that is configured to bring the exhaust gas (G0, G1, G2), which is cooled by the exhaust gas cooling device (14) and introduced into the CO₂ absorption tower (16), into contact with a CO₂ absorption liquid to remove the CO₂ from the exhaust gas (G0, G1, G2), **characterized by** comprising
a cooling water introduction line (10A) that is connected to the exhaust gas cooling device (14) and a supply location (P), which is a location upstream of the dust collector (6) in a flow of the exhaust gas (G0, G1, G2), and is configured to allow at least a portion of the cooling water (W, W1) inside the exhaust gas cooling device (14) to be introduced into the supply location (P).

2. The CO₂ recovery system according to Claim 1,
wherein the cooling water (W, W1) to be introduced into the supply location (P) contains condensed water in which moisture in the exhaust gas (G0, G1, G2) is condensed.

3. The CO₂ recovery system according to Claim 1 or 2,
wherein the cooling water introduction line is connected to the exhaust gas cooling device (14) and the combustion facility (2) and is configured to allow at least a portion of the cooling water (W, W1) inside the exhaust gas cooling device (14) to be introduced into the combustion facility (2).

4. The CO₂ recovery system according to Claim 3, further comprising:
a control unit (40) that is configured to control an amount of the cooling water (W, W1) to be introduced from the exhaust gas cooling device (14) into the combustion facility (2),
wherein the control unit (40) is configured to control the amount of the cooling water (W, W1) to be introduced into the combustion facility (2) according to a combustion state in the combustion facility (2).

5. The CO₂ recovery system according to any one of Claims 1 to 4, further comprising:
a temperature-reducing tower (4) that is provided between the combustion facility (2) and the dust collector (6) in the flow of the exhaust gas (G0, G1, G2) and is configured to cool the exhaust gas (G0, G1, G2),
wherein the cooling water introduction line (10A) is connected to the exhaust gas cooling device (14) and the temperature-reducing tower (4) and is configured to allow at least a portion of the cooling water (W, W1) inside the exhaust gas cooling device (14) to be introduced into the temperature-reducing tower (4).

6. The CO₂ recovery system according to Claim 5, further comprising:
a control unit (40) that is configured to control an amount of the cooling water (W, W1) to be introduced from the exhaust gas cooling device (14) into the temperature-reducing tower (4),
wherein the control unit (40) is configured to control the amount of the cooling water (W, W1) to be introduced into the temperature-reducing tower (4) according to at least one of a flow rate and a temperature of the exhaust gas (G0, G1, G2) to be introduced into the temperature-reducing tower (4).

7. The CO₂ recovery system according to any one of Claims 1 to 6, further comprising:
an adding unit (30) that is configured to add a pH adjuster for adjusting a pH of the cooling water to the cooling water (W, W1).

8. The CO₂ recovery system according to any one of Claims 1 to 7, further comprising:
a supply unit (32) that is provided downstream of the combustion facility (2) in the flow of the exhaust gas (G0, G1, G2) and is configured to supply the exhaust gas (G0, G1, G2) with an acidic gas remover for removing an acidic gas contained in the exhaust gas (G0, G1, G2).

9. The CO₂ recovery system according to Claim 8, further comprising:
a control unit (40) that is configured to control a supply amount of the acidic gas remover.

10. The CO₂ recovery system according to Claim 9,
wherein the control unit (40) is configured to control the supply amount of the acidic gas remover based on a flow rate and a pH of the cooling water to be introduced into the supply location (P).

11. The CO₂ recovery system according to Claim 9 or 10,
wherein the control unit (40) is configured to control the supply amount of the acidic gas remover based on concentration of an impurity contained in the exhaust gas (G0, G1, G2) downstream of a location to which the supply unit (32) is connected.

12. The CO₂ recovery system according to any one of Claims 1 to 10, further comprising:
a control unit (40) that is configured to control an operating condition of the exhaust gas cooling device (14) based on a required flow rate of the cooling water to be introduced into the supply location (P) to adjust a temperature of the exhaust gas (G0, G1, G2) to be discharged from the exhaust gas cooling device (14) and adjusts a flow rate of the cooling water (W, W1) to be introduced into the cooling water introduction line (10A).

13. The CO₂ recovery system according to Claim 12,
wherein the control unit (40) is configured to control at least one of a temperature of the cooling water (W, W1) to be brought into contact with the exhaust gas (G0, G1, G2) and a flow rate per unit time of the cooling water (W, W1) to be brought into contact with the exhaust gas (G0, G1, G2) as the operating condition of the exhaust gas cooling device (14).

14. The CO₂ recovery system according to Claim 12 or 13,
wherein the cooling water (W, W1) having a flow rate corresponding to a flow rate of the cooling water increased inside the exhaust gas cooling device (14) is introduced into the cooling water introduction line (10A), and
the control unit (40) is configured to control the operating condition of the exhaust gas cooling device (14) based on the flow rate of the cooling water (W, W1) to be introduced into the cooling water introduction line (10A) and the required flow rate of the cooling water (W, W1).

15. The CO₂ recovery system according to Claim 14,
wherein the control unit (40) is configured to control the operating condition of the exhaust gas cooling device (14) based on a flow rate of the exhaust gas (G0, G1, G2) to be introduced into the exhaust gas cooling device (14).

16. The CO₂ recovery system according to any one of Claims 1 to 15, further comprising:
a first heating section (50) that is configured to exchange heat between the exhaust gas (G0, G1, G2) before being introduced into the exhaust gas cooling device (14) and the cooling water (W, W1) introduced into the cooling water introduction line (10A) to heat the cooling water (W, W1).

17. The CO₂ recovery system according to Claim 16, further comprising:
a second heating section (50) that is configured to exchange heat between the cooling water (W, W1) heated by the first heating section (50) and a decarbonated gas, which is the exhaust gas (G0, G1, G2) from which the CO₂ has been removed in the CO₂ absorption tower (16), to heat the decarbonated gas.

18. The CO₂ recovery system according to any one of Claims 1 to 17,
wherein a buffer tank (BT) that is configured to store the cooling water (W, W1) corresponding to an increased flow rate in the exhaust gas cooling device (14) is provided on the cooling water introduction line (10A).

19. A CO₂ recovery method comprising:
a step of generating an exhaust gas containing CO₂ by combusting in a combustion facility (2);
a step of removing a solid component from the exhaust gas discharged from the combustion facility, through a dust collector (6);
a step of bringing the exhaust gas (G0, G1, G2) into contact with cooling water (W, W1) to cool the exhaust gas, through an exhaust gas cooling device (14);
a step of bringing the exhaust gas (G0, G1, G2) cooled by the exhaust gas cooling device (14) into contact with a CO₂ absorption liquid to remove the CO₂ from the exhaust gas (G0, G1, G2), **characterized by** comprising
a step of introducing at least a portion of the cooling water (W, W1) inside the exhaust gas cooling device (14) to a supply location (P), which is a location upstream of the dust collector (6) in a flow of the exhaust gas (G0, G1, G2)

## Patentansprüche

1. CO₂-Rückgewinnungssystem, umfassend:
eine Verbrennungsanlage (2);
einen Staubabscheider (6), der konfiguriert ist, eine feste Komponente aus einem CO₂-haltigen Abgas (G0, G1, G2) zu entfernen, wobei das Abgas (G0, G1, G2) aus der Verbrennungsanlage (2) ausgestoßen und in den Staubabscheider (6) eingebracht wird;
eine Abgaskühlvorrichtung (14), die konfiguriert ist, das Abgas (G0, G1, G2), das in die Abgaskühlvorrichtung (14) eingebracht wird, mit Kühlwasser (W, W1) in Kontakt zu bringen, um das Abgas (G0, G1, G2) zu kühlen; und
einen CO₂-Absorptionsturm (16), der konfiguriert ist, das Abgas (G0, G1, G2), das durch die Abgaskühlvorrichtung (14) gekühlt und in den CO₂-Absorptionsturm (16) eingebracht wird, mit einer CO₂-Absorptionsflüssigkeit in Kontakt zu bringen, um das CO₂ aus dem Abgas (G0, G1, G2) zu entfernen,
**dadurch gekennzeichnet, dass** es umfasst
eine Kühlwassereinbringungsleitung (10A), die mit der Abgaskühlvorrichtung (14) und einer Zufuhrstelle (P) verbunden ist, die eine Stelle stromaufwärts des Staubabscheiders (6) in einer Strömung des Abgases (G0, G1, G2) ist, und konfiguriert ist, zu ermöglichen, dass zumindest ein Teil des Kühlwassers (W, W1) innerhalb der Abgaskühlvorrichtung (14) in die Zufuhrstelle (P) eingebracht wird.

2. CO₂-Rückgewinnungssystem nach Anspruch 1,
wobei das in die Zufuhrstelle (P) einzubringende Kühlwasser (W, W1) Kondenswasser enthält, in dem Feuchtigkeit in dem Abgas (G0, G1, G2) kondensiert ist.

3. CO₂-Rückgewinnungssystem nach Anspruch 1 oder 2,
wobei die Kühlwassereinbringungsleitung mit der Abgaskühlvorrichtung (14) und der Verbrennungsanlage (2) verbunden und konfiguriert ist, zu ermöglichen, dass zumindest ein Teil des Kühlwassers (W, W1) innerhalb der Abgaskühlvorrichtung (14) in die Verbrennungsanlage (2) eingebracht wird.

4. CO₂-Rückgewinnungssystem nach Anspruch 3, ferner umfassend:
eine Steuer- bzw. Regeleinheit (40), die konfiguriert ist, eine Menge des Kühlwassers (W, W1) zu steuern bzw. zu regeln, das von der Abgaskühlvorrichtung (14) in die Verbrennungsanlage (2) einzubringen ist,
wobei die Steuer- bzw. Regeleinheit (40) konfiguriert ist, die Menge des in die Verbrennungsanlage (2) einzubringenden Kühlwassers (W, W1) gemäß einem Verbrennungszustand in der Verbrennungsanlage (2) zu steuern bzw. zu regeln.

5. CO₂-Rückgewinnungssystem nach einem der Ansprüche 1 bis 4, ferner umfassend:
einen Temperaturreduzierturm (4), der zwischen der Verbrennungsanlage (2) und dem Staubabscheider (6) in der Strömung des Abgases (G0, G1, G2) bereitgestellt und konfiguriert ist, das Abgas (G0, G1, G2) zu kühlen,
wobei die Kühlwassereinbringungsleitung (10A) mit der Abgaskühlvorrichtung (14) und dem Temperaturreduzierturm (4) verbunden und konfiguriert ist, zu ermöglichen, dass zumindest ein Teil des Kühlwassers (W, W1) innerhalb der Abgaskühlvorrichtung (14) in den Temperaturreduzierturm (4) eingebracht wird.

6. CO₂-Rückgewinnungssystem nach Anspruch 5, ferner umfassend:
eine Steuer- bzw. Regeleinheit (40), die konfiguriert ist, eine Menge des Kühlwassers (W, W1) zu steuern bzw. zu regeln, das von der Abgaskühlvorrichtung (14) in den Temperaturreduzierturm (4) einzubringen ist, wobei die Steuer- bzw. Regeleinheit (40) konfiguriert ist, die Menge des in den Temperaturreduzierturm (4) einzubringenden Kühlwassers (W, W1) gemäß zumindest einem von einer Strömungsrate und einer Temperatur des in den Temperaturreduzierturm (4) einzubringenden Abgases (G0, G1, G2) zu steuern bzw. zu regeln.

7. CO₂-Rückgewinnungssystem nach einem der Ansprüche 1 bis 6, ferner umfassend:
eine Hinzufügeeinheit (30), die konfiguriert ist, dem Kühlwasser (W, W1) ein pH-Einstellmittel zum Einstellen eines pH des Kühlwassers hinzuzufügen.

8. CO₂-Rückgewinnungssystem nach einem der Ansprüche 1 bis 7, ferner umfassend:
eine Zufuhreinheit (32), die stromabwärts der Verbrennungsanlage (2) in der Strömung des Abgases (G0, G1, G2) bereitgestellt und konfiguriert ist, dem Abgas (G0, G1, G2) einen Entferner für saure Gase zuzuführen, um ein in dem Abgas (G0, G1, G2) enthaltenes saures Gas zu entfernen.

9. CO₂-Rückgewinnungssystem nach Anspruch 8, ferner umfassend:
eine Steuer- bzw. Regeleinheit (40), die konfiguriert ist, eine Zufuhrmenge des Entferners für saure Gase zu steuern bzw. zu regeln.

10. CO₂-Rückgewinnungssystem nach Anspruch 9,
wobei die Steuer- bzw. Regeleinheit (40) konfiguriert ist, die Zufuhrmenge des Entferners für saure Gase basierend auf einer Strömungsrate und einem pH des in die Zufuhrstelle (P) einzubringenden Kühlwassers zu steuern bzw. zu regeln.

11. CO₂-Rückgewinnungssystem nach Anspruch 9 oder 10,
wobei die Steuer- bzw. Regeleinheit (40) konfiguriert ist, die Zufuhrmenge des Entferners für saure Gase basierend auf einer Konzentration einer in dem Abgas (G0, G1, G2) enthaltenen Verunreinigung stromabwärts einer Stelle zu steuern bzw. zu regeln, mit der die Zufuhreinheit (32) verbunden ist.

12. CO₂-Rückgewinnungssystem nach einem der Ansprüche 1 bis 10, ferner umfassend:
eine Steuer- bzw. Regeleinheit (40), die konfiguriert ist, einen Betriebszustand der Abgaskühlvorrichtung (14) basierend auf einer erforderlichen Strömungsrate des in die Zufuhrstelle (P) einzubringenden Kühlwassers zu steuern bzw. zu regeln, um eine Temperatur des aus der Abgaskühlvorrichtung (14) auszustoßenden Abgases (G0, G1, G2) einzustellen, und eine Strömungsrate des in die Kühlwassereinbringungsleitung (10A) einzubringenden Kühlwassers (W, W1) einstellt.

13. CO₂-Rückgewinnungssystem nach Anspruch 12,
wobei die Steuer- bzw. Regeleinheit (40) konfiguriert ist, als den Betriebszustand der Abgaskühlvorrichtung (14) zumindest eines einer Temperatur des Kühlwassers (W, W1), das mit dem Abgas (G0, G1, G2) in Kontakt zu bringen ist, und einer Strömungsrate pro Einheit Zeit des Kühlwassers (W, W1), das mit dem Abgas (G0, G1, G2) in Kontakt zu bringen ist, zu steuern bzw. zu regeln.

14. CO₂-Rückgewinnungssystem nach Anspruch 12 oder 13,
wobei das Kühlwasser (W, W1) mit einer Strömungsrate, die einer innerhalb der Abgaskühlvorrichtung (14) erhöhten Strömungsrate des Kühlwassers entspricht, in die Kühlwassereinbringungsleitung (10A) eingebracht wird, und die Steuer- bzw. Regeleinheit (40) konfiguriert ist, den Betriebszustand der Abgaskühlvorrichtung (14) basierend auf der Strömungsrate des Kühlwassers (W, W1), das in die Kühlwassereinbringungsleitung (10A) einzubringen ist, und der erforderlichen Strömungsrate des Kühlwassers (W, W1) zu steuern bzw. zu regeln.

15. CO₂-Rückgewinnungssystem nach Anspruch 14,
wobei die Steuer- bzw. Regeleinheit (40) konfiguriert ist, den Betriebszustand der Abgaskühlvorrichtung (14) basierend auf einer Strömungsrate des Abgases (G0, G1, G2) zu steuern bzw. zu regeln, das in die Abgaskühlvorrichtung (14) einzubringen ist.

16. CO₂-Rückgewinnungssystem nach einem der Ansprüche 1 bis 15, ferner umfassend:
einen ersten Heizabschnitt (50), der konfiguriert ist, Wärme zwischen dem Abgas (G0, G1, G2), bevor dieses in die Abgaskühlvorrichtung (14) eingebracht wird, und dem in die Kühlwassereinbringungsleitung (10A) eingebrachten Kühlwasser (W, W1) auszutauschen, um das Kühlwasser (W, W1) zu erwärmen.

17. CO₂-Rückgewinnungssystem nach Anspruch 16, ferner umfassend:
einen zweiten Heizabschnitt (50), der konfiguriert ist, Wärme zwischen dem durch den ersten Heizabschnitt (50) erwärmten Kühlwasser (W, W1) und einem entcarbonisierten Gas, welches das Abgas (G0, G1, G2) ist, aus dem das CO₂ in dem CO₂-Absorptionsturm (16) entfernt wurde, auszutauschen, um das entcarbonisierte Gas zu erwärmen.

18. CO₂-Rückgewinnungssystem nach einem der Ansprüche 1 bis 17,
wobei ein Puffertank (BT), der konfiguriert ist, das Kühlwasser (W, W1) entsprechend einer erhöhten Strömungsrate in der Abgaskühlvorrichtung (14) zu speichern, an der Kühlwassereinbringungsleitung (10A) bereitgestellt ist.

19. CO₂-Rückgewinnungsverfahren, umfassend:
einen Schritt des Erzeugens eines CO₂-haltigen Abgases durch Verbrennung in einer Verbrennungsanlage (2);
einen Schritt des Entfernens einer festen Komponente aus dem Abgas, das aus der Verbrennungsanlage ausgestoßen wird, mittels eines Staubabscheiders (6);
einen Schritt des Inkontaktbringens des Abgases (G0, G1, G2) mit Kühlwasser (W, W1) zum Kühlen des Abgases mittels einer Abgaskühlvorrichtung (14);
einen Schritt des Inkontaktbringens des durch die Abgaskühlvorrichtung (14) gekühlten Abgases (G0, G1, G2) mit einer CO₂-Absorptionsflüssigkeit, um das CO₂ aus dem Abgas (G0, G1, G2) zu entfernen,
**dadurch gekennzeichnet, dass** es umfasst
einen Schritt des Einbringens zumindest eines Teils des Kühlwassers (W, W1) innerhalb der Abgaskühlvorrichtung (14) an bzw. in eine Zufuhrstelle (P), die eine Stelle stromaufwärts des Staubabscheiders (6) in einer Strömung des Abgases (G0, G1, G2) ist.

## Revendications

1. Système de récupération de CO₂ comprenant :
une installation de combustion (2) ;
un dépoussiéreur (6) qui est configuré pour éliminer un composant solide d'un gaz d'échappement (G0, G1, G2) contenant du CO₂, le gaz d'échappement (G0, G1, G2) étant évacué de l'installation de combustion (2) et introduit dans le dépoussiéreur (6) ;
un dispositif (14) de refroidissement de gaz d'échappement qui est configuré pour amener le gaz d'échappement (G0, G1, G2), qui est introduit dans le dispositif (14) de refroidissement de gaz d'échappement, en contact avec de l'eau de refroidissement (W, W1) afin de refroidir le gaz d'échappement (G0, G1, G2) ; et
une tour d'absorption de CO₂ (16) qui est configurée pour amener le gaz d'échappement (G0, G1, G2), qui est refroidi par le dispositif (14) de refroidissement de gaz d'échappement et introduit dans la tour d'absorption de CO₂ (16), en contact avec un liquide d'absorption de CO₂ pour éliminer le CO₂ du gaz d'échappement (G0, G1, G2), **caractérisé en ce qu'**il comprend
une conduite (10A) d'introduction d'eau de refroidissement qui est raccordée au dispositif (14) de refroidissement de gaz d'échappement et à un point d'alimentation (P), qui est un point en amont du dépoussiéreur (6) dans un flux du gaz d'échappement (G0, G1, G2), et est configurée pour permettre d'introduire au moins une partie de l'eau de refroidissement (W, W1) à l'intérieur du dispositif (14) de refroidissement de gaz d'échappement dans le point d'alimentation (P).

2. Système de récupération de CO₂ selon la revendication 1,
dans lequel l'eau de refroidissement (W, W1) à introduire dans le point d'alimentation (P) contient de l'eau condensée dans laquelle l'humidité dans le gaz d'échappement (G0, G1, G2) est condensée.

3. Système de récupération de CO₂ selon la revendication 1 ou 2,
dans lequel la conduite d'introduction d'eau de refroidissement est raccordée au dispositif (14) de refroidissement de gaz d'échappement et à l'installation de combustion (2) et est configurée pour permettre d'introduire au moins une partie de l'eau de refroidissement (W, W1) à l'intérieur du dispositif (14) de refroidissement de gaz d'échappement dans l'installation de combustion (2).

4. Système de récupération de CO₂ selon la revendication 3, comprenant en outre :
une unité de commande (40) qui est configurée pour commander une quantité de l'eau de refroidissement (W, W1) à introduire à partir du dispositif (14) de refroidissement de gaz d'échappement dans l'installation de combustion (2),
dans lequel l'unité de commande (40) est configurée pour commander la quantité de l'eau de refroidissement (W, W1) à introduire dans l'installation de combustion (2) selon un état de combustion dans l'installation de combustion (2).

5. Système de récupération de CO2 selon l'une quelconque des revendications 1 à 4, comprenant en outre :
une tour de réduction de température (4) qui est disposée entre l'installation de combustion (2) et le dépoussiéreur (6) dans le flux de gaz d'échappement (G0, G1, G2) et est configurée pour refroidir le gaz d'échappement (G0, G1, G2),
dans lequel la conduite (10A) d'introduction d'eau de refroidissement est raccordée au dispositif (14) de refroidissement de gaz d'échappement et à la tour de réduction de température (4) et est configurée pour permettre d'introduire au moins une partie de l'eau de refroidissement (W, W1) à l'intérieur du dispositif (14) de refroidissement de gaz d'échappement dans la tour de réduction de température (4).

6. Système de récupération de CO₂ selon la revendication 5, comprenant en outre :
une unité de commande (40) qui est configurée pour commander une quantité de l'eau de refroidissement (W, W1) à introduire à partir du dispositif (14) de refroidissement de gaz d'échappement dans la tour de réduction de température (4),
dans lequel l'unité de commande (40) est configurée pour commander la quantité de l'eau de refroidissement (W, W1) à introduire dans la tour de réduction de température (4) selon au moins l'un parmi un débit et une température du gaz d'échappement (G0, G1, G2) à introduire dans la tour de réduction de température (4).

7. Système de récupération de CO2 selon l'une quelconque des revendications 1 à 6 comprenant en outre :
une unité d'ajout (30) qui est configurée pour ajouter un régulateur de pH pour réguler un pH de l'eau de refroidissement à l'eau de refroidissement (W, W1).

8. Système de récupération de CO2 selon l'une quelconque des revendications 1 à 7 comprenant en outre :
une unité d'alimentation (32) qui est disposée en aval de l'installation de combustion (2) dans le flux du gaz d'échappement (G0, G1, G2) et est configurée pour alimenter en agent d'élimination de gaz acide le gaz d'échappement (G0, G1, G2) afin d'éliminer un gaz acide contenu dans le gaz d'échappement (G0, G1, G2).

9. Système de récupération de CO₂ selon la revendication 8, comprenant en outre :
une unité de commande (40) qui est configurée pour commander une quantité d'alimentation de l'agent d'élimination de gaz acide.

10. Système de récupération de CO₂ selon la revendication 9,
dans lequel l'unité de commande (40) est configurée pour commander la quantité d'alimentation de l'agent d'élimination de gaz acide sur la base d'un débit et d'un pH de l'eau de refroidissement à introduire dans le point d'alimentation (P).

11. Système de récupération de CO₂ selon la revendication 9 ou 10,
dans lequel l'unité de commande (40) est configurée pour commander la quantité d'alimentation de l'agent d'élimination de gaz acide sur la base d'une concentration d'une impureté contenue dans le gaz d'échappement (G0, G1, G2) en aval d'un point auquel l'unité d'alimentation (32) est raccordée.

12. Système de récupération de CO₂ selon l'une quelconque des revendications 1 à 10, comprenant en outre :
une unité de commande (40) qui est configurée pour commander une condition de fonctionnement du dispositif (14) de refroidissement de gaz d'échappement sur la base d'un débit requis de l'eau de refroidissement à introduire dans le point d'alimentation (P) pour réguler une température de gaz d'échappement (G0, G1, G2) à évacuer du dispositif (14) de refroidissement de gaz d'échappement et régule un débit de l'eau de refroidissement (W, W1) à introduire dans la conduite (10A) d'introduction d'eau de refroidissement.

13. Système de récupération de CO₂ selon la revendication 12,
dans lequel l'unité de commande (40) est configurée pour commander au moins l'un d'une température de l'eau de refroidissement (W, W1) à mettre en contact avec le gaz d'échappement (G0, G1, G2) et d'un débit par unité de temps de l'eau de refroidissement (W, W1) à mettre en contact avec le gaz d'échappement (G0, G1, G2) en tant que condition de fonctionnement du dispositif (14) de refroidissement de gaz d'échappement.

14. Système de récupération de CO₂ selon la revendication 12 ou 13,
dans lequel l'eau de refroidissement (W, W1) présentant un débit correspondant à un débit de l'eau de refroidissement accru à l'intérieur du dispositif (14) de refroidissement de gaz d'échappement est introduite dans la conduite (10A) d'introduction d'eau de refroidissement, et
l'unité de commande (40) est configurée pour commander la condition de fonctionnement du dispositif (14) de refroidissement de gaz d'échappement sur la base du débit de l'eau de refroidissement (W, W1) à introduire dans la conduite (10A) d'introduction d'eau de refroidissement et du débit requis de l'eau de refroidissement (W, W1).

15. Système de récupération de CO₂ selon la revendication 14,
dans lequel l'unité de commande (40) est configurée pour commander la condition de fonctionnement du dispositif (14) de refroidissement de gaz d'échappement sur la base d'un débit du gaz d'échappement (G0, G1, G2) à introduire dans le dispositif (14) de refroidissement de gaz d'échappement.

16. Système de récupération de CO₂ selon l'une quelconque des revendications 1 à 15, comprenant en outre :
une première section de chauffage (50) qui est configurée pour échanger de la chaleur entre le gaz d'échappement (G0, G1, G2) avant qu'il ne soit introduit dans le dispositif (14) de refroidissement de gaz d'échappement et l'eau de refroidissement (W, W1) introduite dans la conduite (10A) d'introduction d'eau de refroidissement pour chauffer l'eau de refroidissement (W, W1).

17. Système de récupération de CO₂ selon la revendication 16, comprenant en outre :
une seconde section de chauffage (50) qui est configurée pour échanger de la chaleur entre l'eau de refroidissement (W, W1) chauffée par la première section de chauffage (50) et un gaz décarbonaté, qui est le gaz d'échappement (G0, G1, G2) dont le CO₂ a été éliminé dans la tour d'absorption de CO₂ (16), afin de chauffer le gaz décarbonaté.

18. Système de récupération de CO₂ selon l'une quelconque des revendications 1 à 17,
dans lequel un réservoir tampon (BT) qui est configuré pour stocker l'eau de refroidissement (W, W1) correspondant à un débit accru dans le dispositif (14) de refroidissement de gaz d'échappement est disposé sur la conduite (10A) d'introduction d'eau de refroidissement.

19. Méthode de récupération de CO₂, comprenant :
une étape de génération d'un gaz d'échappement contenant du CO₂ par combustion dans une installation de combustion (2) ;
une étape d'élimination d'un composant solide du gaz d'échappement évacué de l'installation de combustion, à travers un dépoussiéreur (6) ;
une étape de mise en contact du gaz d'échappement (G0, G1, G2) avec de l'eau de refroidissement (W, W1) pour refroidir le gaz d'échappement, à travers un dispositif (14) de refroidissement de gaz d'échappement ;
une étape de mise en contact du gaz d'échappement (G0, G1, G2) refroidi par le dispositif (14) de refroidissement de gaz d'échappement avec un liquide d'absorption de CO₂ afin d'éliminer le CO₂ du gaz d'échappement (G0, G1, G2), **caractérisée en ce qu'**elle comprend
une étape d'introduction d'au moins une partie de l'eau de refroidissement (W, W1) à l'intérieur du dispositif (14) de refroidissement de gaz d'échappement dans un point d'alimentation (P), qui est un point en amont du dépoussiéreur (6) dans un flux du gaz d'échappement (G0, G1, G2)
